# EUROPEAN PATENT SPECIFICATION

(11) **EP 3 403 126 B1**
(45) Date of publication and mention of the grant of the patent: **30.12.2020**
(21) Application number: 17844356.0
(22) Date of filing: 23.08.2017
(51) Int. Cl.: G02B 21/00, G02B 26/10, G02B 27/58, G02B 21/16, G02B 21/36, G01N 21/64

(54) **SYSTEMS AND METHODS FOR INSTANT TOTAL INTERNAL REFLECTION FLUORESCENCE/STRUCTURED ILLUMINATION MICROSCOPY**
SYSTEME UND VERFAHREN ZUR SOFORTIGEN INTERNEN TOTALREFLEXIONSFLUORESZENZ-/STRUKTURIERTEN BELEUCHTUNGSMIKROSKOPIE
SYSTÈMES ET PROCÉDÉS POUR MICROSCOPIE DE FLUORESCENCE À RÉFLEXION INTERNE TOTALE/MICROSCOPIE PAR ILLUMINATION STRUCTURÉE

(30) Priority: 23.08.2016 US 201662378307 P
(43) Date of publication of application: 21.11.2018
(73) Proprietor: The United States Of America, As Represented By The Secretary, Department Of Health And Human Services, Bethesda, MD 20892-7660 (US)
(72) Inventor: SHROFF, Hari, Bethesda, Maryland 20892-7660 (US); TARASKA, Justin, Bethesda, Maryland 20892-7660 (US); GIANNINI, John, Bethesda, Maryland 20892-7660 (US); KUMAR, Abhishek, Bethesda, Maryland 20892-7660 (US); GUO, Min, Bethesda, Maryland 20892-7660 (US); WU, Yicong, Bethesda, Maryland 20892-7660 (US)
(74) Representative: Zacco Denmark A/S
(86) International application number: PCT/US2017/048234
(87) International publication number: WO 2018/039361

(56) References cited:
- EP-A1- 3 032 312
- WO-A1-2012/118530
- US-A1- 2016 238 827
- US-A1- 2016 238 827
- US-B2- 9 360 660
- LAURENCE J. YOUNG ET AL: "A Guide to Structured Illumination TIRF Microscopy at High Speed with Multiple Colors", JOURNAL OF VISUALIZED EXPERIMENTS, no. 111, 30 May 2016 (2016-05-30), XP055607172, DOI: 10.3791/53988

## Description

### FIELD

The present disclosure generally relates to instant structured illumination microscopy (SIM) and in particular to systems and methods for instant structured illumination microscopy where total internal reflection fluorescence (TIRF) techniques may be used to improve optical sectioning and signal-to-noise ratio.

### BACKGROUND

Total internal reflection occurs when highly inclined light impinges upon a refractive index boundary (with first medium index n₁ and second medium index n₂, with n₁ > n₂). According to Snell's Law, n₁ sin(theta1) = n₂ sin(theta2), where theta1 is the angle of incoming light (measured from the surface normal) and theta2 is the corresponding outgoing angle for the refracted light. For theta2 = pi/2, theta1 = arcsin(n₂/n₁) is the "critical angle". Any light ray at or exceeding the critical angle is "totally internally reflected", and no light propagates past the interface into the far field on the lower index side of the boundary. Nevertheless, an evanescent wave exists at the interface of the boundary and can excite fluorescent molecules within lambda (the wavelength of excitation) distance from the boundary, on the n₂ side. This evanescent wave is used in TIRF to generate very high contrast, high signal-to-noise ratio images of fluorescently-labeled samples, such as the cell membrane, at or near the coverslip boundary.

A convenient method of setting up TIRF conditions is to use a high numerical aperture objective (typically 1.4 NA or higher, so that aqueous samples with n2 ∼ 1.33, the refractive index of a cell may be imaged) and ensure that only marginal rays pass through the back focal plane of the objective lens. Such "objective side TIRF" has been very successful in cell biology applications, where it has been used for decades.

Structured illumination microscopy (SIM) is a method that uses sharply patterned light and post-processing of images to enhance image resolution (in its linear form, doubling resolution). In traditional SIM, a series of images are acquired with a camera and computationally processed to improve resolution. This implementation of SIM has also been combined with TIRF, but the implementation still requires 9 raw images relative to normal TIRF microscopy, thereby slowing acquisition 9-fold relative to conventional, diffraction-limited imaging. As such, there is a need for a method that combines SIM with TIRF conditions that does not result in a loss of speed relative to conventional TIRF microscopy.
US2016238827A1 discloses a multi-focal selective illumination microscopy (SIM) system for generating multi-focal patterns of a sample is disclosed. The multi-focal SIM system performs a focusing, scaling and summing operation on each multi-focal pattern in a sequence of multi-focal patterns that completely scan the sample to produce a high resolution composite image.
EP3032312A1 discloses a confocal scanner comprising a first micro lens disk and a second micro lens disk with corresponding microlens arrangement patterns and rotation axis. A beam splitter is configured to guide illumination light via the first micro lens disk to an object and further configured to guide a return light from the object having passed through each micro lens of the first micro lens to the corresponding micro lens of the second micro lens disk. A numerical aperture of each micro lens arranged on the second micro lens disk is greater than a numerical aperture of each micro lens arranged on the first micro lens disk. The confocal scanner is thereby configured to obtain a super resolution image by optical processing.

It is with these observations in mind, among others, that various aspects of the present disclosure were conceived and developed.

### BRIEF DESCRIPTION OF THE DRAWINGS

FIG. 1 is a simplified illustration showing a first embodiment of an instant TIRF/SIM system with a radial aperture block, according to aspects of the present disclosure;
FIG. **2** is a simplified illustration showing a second embodiment of with an instant TIRF/SIM system with a digital micro-mirror device, according to aspects of the present disclosure;
FIG. **3** is an illustration showing the reflected light rays and the effect of the evanescent wave on the instant TIRF/SIM system, according to aspects of the present disclosure;
FIG. **4** is a simplified illustration showing a third embodiment of the instant TIRF/SIM system with a spatial light modulator in combination with a radial aperture block, according to aspects of the present disclosure;
FIG. **5** is a simplified illustration showing a fourth embodiment of the instant TIRF/SIM system with a spinning disk implementation, according to aspects of the present disclosure;
FIG. **6** is an illustration showing a working model of the first embodiment of the instant TIRF/SIM system, according to aspects of the present disclosure;
FIGS. **7A-7C** show various images taken with the instant TIRF/SIM system and FIGS. **7D** and **7E** are graphical representations showing comparative line profiles, according to aspects of the present disclosure;
FIGS. **8A-8H** show various images taken with the instant TIRF/SIM system of protein distributions in the vicinity of the plasma membrane over hundreds of time points, according to aspects of the present disclosure;
FIGS. **9A-9D** show various images taken with the instant TIRF/SIM system of Rab11 transfected into U2OS cells, according to aspects of the present disclosure;
FIGS. **10A-10I** show a comparison of excitation and emission patterns between conventional microscopy and the instant TIRF/SIM system, according to aspects of the present disclosure;
FIGS. **11A-11C** show an estimation of evanescent field decay length with silica beads placed in a fluorescent dye, according to aspects of the present disclosure;
FIGS. **12A-12D** show comparative images between a conventional instant SIM system and the instant TIRF/SIM system, according to aspects of the present disclosure;
FIGS. **13A-13F** show comparative representative bead images between a conventional SIM system and the instant TIRF/SIM system, according to aspects of the present disclosure;
FIGS. **14A** and **14B** show biological resolution standards for the instant TIRF/SIM system , according to aspects of the present disclosure;
FIGS. **15A** and 15B show comparative images of a conventional SIM system and the instant TIRF/SIM system, according to aspects of the present disclosure;
FIGS. **16A-16D** are histograms of total displacement and mean speed of tracked particles, according to aspects of the present disclosure;
FIGS. **17A** and **17B** show images illustrating the effect of temporal undersampling on automated tracking, according to aspects of the present disclosure;
FIG. **18** is a simplified illustration showing a multi-focal pattern with a plurality of focal points; and
FIG. **19** is a simplified illustration showing a scaling operation that scales in-focus fluorescent emissions resulting from a multi-focal fluorescence pattern emitted by a sample.

Corresponding reference characters indicate corresponding elements among the view of the drawings. The headings used in the figures do not limit the scope of the claims.

### DETAILED DESCRIPTION

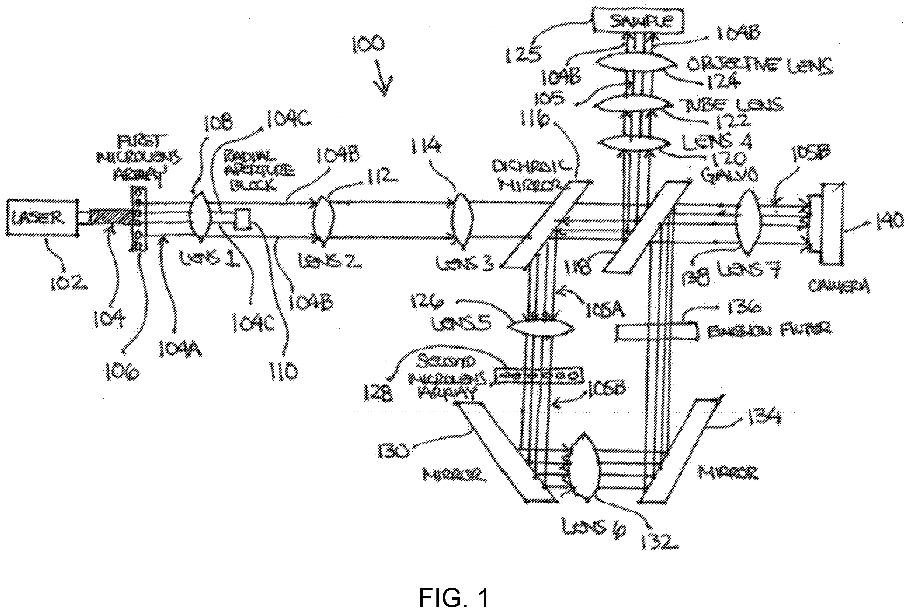

Systems and methods for applying total internal reflection fluorescence (TIRF) to instant structured illumination microscopy (SIM) are disclosed herein. In some embodiments, the instant TIRF/SIM system includes a radial aperture block positioned at a plane conjugate to the back focal plane of the objective lens, thus allowing only high-angle marginal annular light beams from a laser source to excite the sample. In some embodiments, the radial aperture block of the first embodiment of the instant TIRF/SIM system is replaced with a digital micromirror device (DMD) for varying the evanescent wave to allow ∼nm localization of features in the axial direction. In some embodiments, a spatial light modulator (SLM) is used to alter the phase of the excitation to optimally induce evanescent, patterned excitation at the sample. In some embodiments, the radial aperture block is combined with a spinning disk arrangement including a pair of spinning disks having converging microlenses which are arranged with a spinning disk having pinholes to produce contracted non-inverted images of fluorescent foci being emitted by the sample. Combinations of the SLM, DMD, spinning disk arrangement, and an aperture block are also possible. Various embodiments of the instant TIRF/SIM system allows for high-speed, super-resolution microscopy at very high signal-to-noise (SNR) ratios for biological applications within -200 nm (e.g., the evanescent wave decay length) distance of a coverslip surface. Referring to the drawings, embodiments of an instant TIRF/SIM system are illustrated and generally indicated as **100**, **200**, **300** and **400** in FIGS. **1-19****.**

Referring to FIG. **1**, a first embodiment of the instant TIRF/SIM system, designated **100** implements a radial aperture block **110** positioned at a plane conjugate to the back focal plane of the objective lens **124**, thus allowing only marginal, annular excitation light beams to pass through for scanning onto a sample **125** as shown in FIG. **1****.** In this embodiment, the instant TIRF/SIM system **100** includes an excitation source **102**, for example a laser component, that generates an excitation beam **104** which is transmitted through a first micro lens array **106.** The first micro lens array **106** splits the excitation beam **104** into an array of excitation foci **104A.** A first lens **108** is positioned one focal length away from the focal point of the first micro lens array **106.** In addition, a radial aperture block **110** is positioned at the front focal plane of the first lens **108** to block central rays emerging from the first lens **108,** thereby allowing only high-angle, marginal rays **104B** emerging from the first lens **108** to pass through the radial aperture block **110.**

An imaging telescope arrangement includes a second lens **112** in line with a third lens **114** that collectively image the marginal rays **104B** that pass through the radial aperture block **110.** The second and third lenses **112** and **114** image the marginal rays **104B** to pass through a dichroic mirror **116** and onto a two-sided galvanometric mirror **118.** In some embodiments, the second and third lenses **112** and **114** are separated by the sum of their respective focal lengths. The galvanometric mirror **118** redirects and scans the marginal rays **104B** through a fourth lens **120** in line with a tube lens **122** and onto the back focal plane of a high numerical aperture objective lens **124.** This optical arrangement produces a structured illumination that does not propagate into the sample **125,** but evanescently excites the sample **125** with the marginal rays **104B** being imaged onto the sample **125** by the objective lens **124.** Since the marginal rays impinge upon the sample at an angle that exceeds the critical angle they do not propagate into the sample, instead causing only an evanescent wave that decays exponentially within the sample. The combination of evanescent (caused by the high angle rays that are created by the radial annular block **110**), patterned/structured illumination (caused by the micro lens array **106**) causes very sharp/high contrast excitation at the sample. In some embodiments, the objective lens **124** may have a numerical aperture > 1.4 NA (i.e. greater than the refractive index of the sample **125**), such as 1.65 NA or 1.70 NA.

The resulting excitation **105** generated by the sample **125** scanned by the galvanometer mirror **118** produces a patterned fluorescence emission **105A** that may be collected in epi-mode, and then descanned by the galvanometric mirror **118** as the fluorescence emissions **105A** are imaged by the arrangement of the objective lens **124,** tube lens **122** and fourth lens **120** aligned with the galvanometric mirror **118.** The fluorescence emissions **105A** emitted by the sample **125** are then separated from the resulting excitation **105** via the dichroic mirror **116** that redirects the fluorescence emission **105A.**

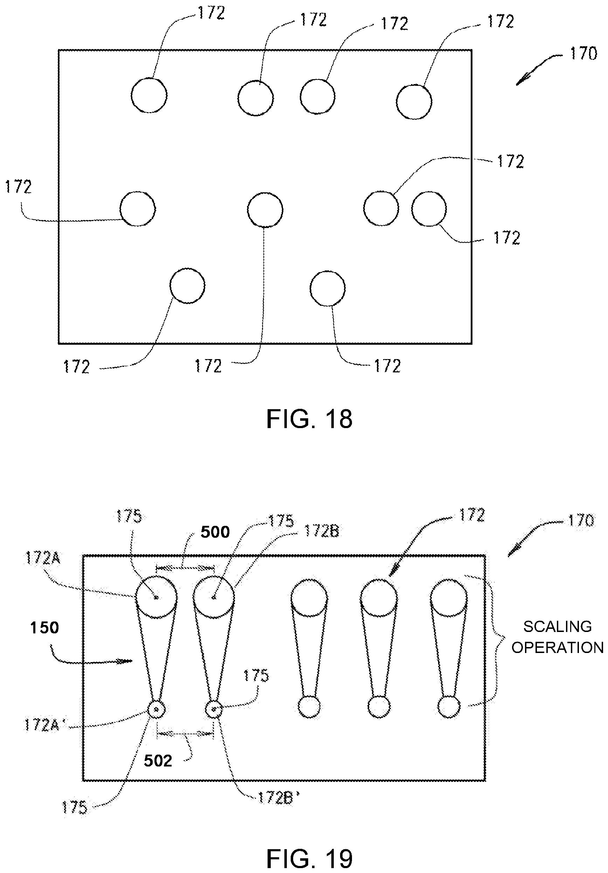

In some embodiments, a fifth lens **126** is positioned one focal length from the galvanometric mirror **118.** The fifth lens **126** focuses the descanned fluorescence emission **105A** through a second micro lens array **128.** The second micro lens array **128** has the same pitch/pattern and lens spacing as the first micro lens array **106** such that the fluorescence emissions **105A** are locally contracted into contracted fluorescence emissions **105B** without inversion or changing the relative distance between adjacent fluorescence emissions **105A** as shown in FIGS. **18** and **19****.**

When the contracted fluorescence emissions **105B** are locally contracted the "contraction factor" depends on the respective wavelengths of the excitation beam **104** and fluorescence emissions **105A** and the properties of the radial aperture block **110,** and in most cases, may be set at a value of approximately 2. For example, a multi-focal pattern **170** for the fluorescence emissions **105A** that may be locally contracted into contracted fluorescence emissions **105B** is shown in FIGS. **18** and **19****.** In one embodiment, the multi-focal pattern **170** may include a plurality of focal points **172** arranged in a particular multi-focal pattern **170** defined by the plurality of light beams with each multi-focal pattern **170** defining a different arrangement of focal points for the plurality of light beams such that multi-focal pattern **170** maximizes the distance between any two nearest focal points **172** for a given density of focal points **172,** thereby minimizing crosstalk. As used herein, the term "crosstalk" refers to the ability of nearby light beams to cause excitation and fluorescence from other focal points to appear as if focal points originate from the focal point in question. In a scanning operation, the plurality of light beams in each multi-focal illumination pattern are rastered onto the sample **125** being illuminated such that the sample **125** emits a plurality of fluorescent emissions. The fluorescent emissions emitted by the sample **125** are rastered in a de-scanning operation which redirects the plurality of fluorescent emissions for removal of out-of-focus fluorescent emissions in a focusing operation. In the focusing operation, out-of-focus fluorescent emissions are blocked and only in-focus fluorescent emissions are allowed to pass through for processing.

The in-focus fluorescent emissions caused by each multi-focal pattern are then scaled using a scaling operation that locally contracts each of fluorescent emissions by a predetermined factor. In one embodiment of the scaling operation illustrated in FIG. **19****,** a local contraction of the fluorescent foci **172** caused in a single multi-focal pattern **170** occurs. For example, the local contraction of fluorescent foci **172A** and **172B** to scaled fluorescent foci **172A'** and **172B',** respectively, in the multi-focal pattern **170** is such that the distance **500** between the geometric centers **175** of fluorescent foci **172A** and **172B** and the distance **502** of fluorescent foci **172A** and **172B** remains the same regardless of the degree of scaling applied to the fluorescent foci **172** of the multi-focal pattern **170.** In other words, the scaling operation **150** contracts the fluorescent foci **172** locally while keeping the relative distances between each of the fluorescent foci the same.

Referring back to FIG. **1**, in some embodiments, a sixth lens **132** is positioned between opposing first and second mirrors **130** and **134.** The sixth lens **132** is positioned one focal length from the contracted fluorescence emissions **105B** and the galvanometer mirror **118** and serves to Fourier-transform the contracted fluorescence emissions **105B** onto the galvanometer mirror **118.** In this arrangement, the galvanometer mirror **118** and the seventh lens **138** serve to rescan the contracted fluorescence emissions **105B** that forms an image onto a detector component **140,** such as a camera, to capture the image.

In some embodiments, an emission filter **136** may be interposed between the second mirror **134** and the galvanometer **118** to remove any residual resulting excitation **105** from the contracted fluorescence emissions **105B.**

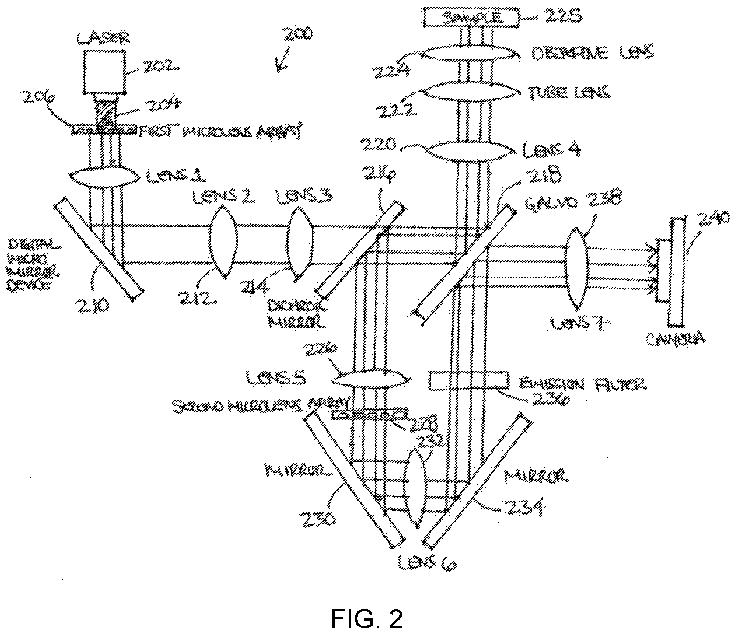

Referring to FIG. **2****,** another embodiment of the instant TIRF/SIM system, designated **200,** substitutes the radial aperture block **110** with a digital micromirror device **210** that varies the evanescent wave to allow ∼nm localization of feature in the axial direction. In this embodiment, the instant TIRF/SIM system **200** includes an excitation source **202,** for example a laser component, that generates an excitation beam **204** that is transmitted and passes through a first micro lens array **206.** The first micro lens array **206** splits the excitation beam **204** into an array of excitation foci **204A.** A first lens **208** is positioned one focal length away from the focal point of the first micro lens array **206.** As noted above, the digital micromirror device **210,** rather than a radial aperture block **110**, may be in communication with the first microlens array **206.** In some embodiments, the digital micromirror device **210** is positioned at the front focal plane of the first lens **208** to block all but the high-angle marginal rays **104B** emerging from the first lens **208.** In other words, all of the pixels of the digital micromirror device **210,** except those pixels along the periphery of the digital micromirror device **210,** are set to reflect the low-angle central rays off axis, thus effectively removing the low-angle central rays from illuminating the sample **225** in a manner similar to the radial block aperture **110.** By varying the number and area of the pixels in this reflective zone, the degree of transmitted marginal rays **104B** can also be varied, ultimately corresponding to varying the thickness of the evanescent field at the sample **225.**

In some embodiments, an imaging telescope arrangement includes a second lens **212** in line with a third lens **214** that collectively image the marginal rays **204B** to pass through a dichroic mirror **216** and onto a two-sided galvanometric mirror **218.** In some embodiments, the second and third lenses **212** and **214** are separated by a distance that is the sum of their respective focal lengths. The galvanometric mirror **218** redirects and images the marginal rays **204B** along third axis **404** through a fourth lens **220** in line with a tube lens **222** and onto the back focal plane of a high numerical aperture objective lens **224.** This arrangement produces a structured illumination that does not propagate into a sample **225,** but evanescently excites the sample **224** with the marginal rays **204B** imaged onto the sample **225** by the objective lens **224.** In some embodiments, the objective lens **224** may have a numerical aperture > 1.4 NA, such as 1.65 NA or 1.70 NA.

The resulting excitation **205** of the sample **225** produces a patterned fluorescence emission **205A** that may be collected in epi-mode, and then descanned by the galvanometric mirror **218** as the fluorescence emissions **205A** are imaged by the objective lens **224,** tube lens **222** and fourth lens **220** onto the galvanometer mirror **218**. The fluorescence emissions **205A** are then separated from the resulting excitation **205** via the dichroic mirror **216** that redirects the fluorescence emission **205A.**

In some embodiments, a fifth lens **226** is positioned one focal length from the galvanometric mirror **218.** The fifth lens **226** focuses the descanned fluorescence emission **205A** through a second micro lens array **228.** The second micro lens array **228** has the same pitch/pattern and lens spacing as the first micro lens array **206** such that the fluorescence emissions **205A** are locally contracted into contracted fluorescence emissions **205B** without inversion or changing the relative distance between adjacent fluorescence emissions **205A.**

When the contracted fluorescence emissions **205B** are locally contracted the contraction factor depends on the respective wavelengths of the excitation beam **204** and fluorescence emissions **205A** and the characteristics of the pattern displayed on the digital micro-mirror device **210** and as discussed above, may be set at a value of approximately 2. In some embodiments, a sixth lens **232** is positioned between opposing first and second mirrors **230** and **234,** which is in perpendicular relation to the first, third and fourth axes **400, 404** and **406.** The sixth lens **232** is positioned one focal length from the contracted fluorescence emissions **205B** and the galvanometer mirror **218** and serves to Fourier-transform the contracted fluorescence emissions **205B** onto the galvanometer mirror **218.** In this arrangement, the galvanometer **218** and the seventh lens **238** serve to rescan the contracted fluorescence emissions **205B** that forms an image onto a detector component **240,** such as a camera, to capture the image.

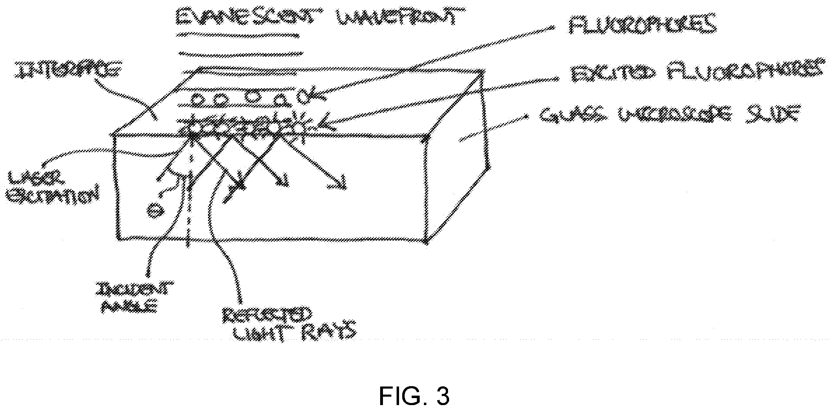

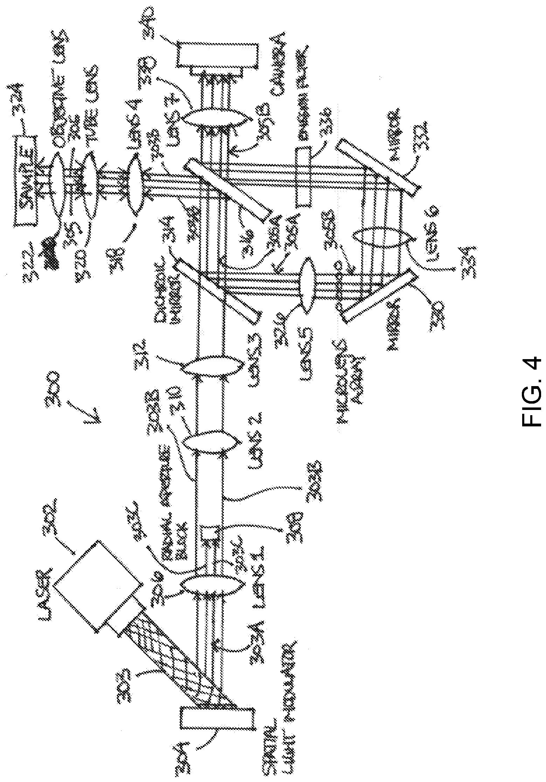

In some embodiments of the instant TIRF/SIM system **300** the excitation micro lens array **106** may be replaced by a spatial light modulator **304** or other element that enables the phase of the excitation beam **303** to be manipulated while also generating a patterned illumination at the sample **324.** By generating an appropriate pattern on the spatial light modulator **304,** unwanted interference that would otherwise arise due to the interaction of the high angle, annular structured illumination can be minimized. The front face of the spatial light modulator **304** is imaged onto the sample **324** as indicated by the optical system illustrated in FIG. **4****.** All other optics are the same or similar to the first embodiment of the instant TIRF/SIM system **100** illustrated in FIG. **1****.** In one embodiment, the excitation pattern produced by the spatial light modulator **304** of FIG. **3** is required to have the same pitch as the second microlens array **128** of FIG. **1****.**

Referring to FIG. **4**, a third embodiment of the instant TIRF/SIM system, designated **300**, implements a radial aperture block **308** positioned at a plane conjugate to the back focal plane of the objective lens **322,** thus allowing only marginal, annular excitation light beams **303B** to pass through for scanning onto a sample **324.** Alternatively, the radial aperture block **308** may be replaced by a digital micromirror device (not shown) and enabling additional functionality (i.e., nm localization in the z direction). In this embodiment, the instant TIRF/SIM system **300** includes an excitation source **302,** for example a laser component, that generates an excitation beam **303** which is transmitted onto a spatial light modulator **304** that splits the excitation beam **303** into an array of excitation foci **303A.** A first lens **306** is positioned one focal length away from the focal point of the spatial light modulator **304.** In addition, a radial aperture block **308** is positioned at the front focal plane of the first lens **306** to block central rays **303C** emerging from the first lens **306,** thereby allowing only high-angle, marginal rays **303B** emerging from the first lens **306** to pass through the radial aperture block **308.**

An imaging telescope arrangement includes a second lens **310** in line with a third lens **312** that collectively image the high-angle marginal rays **303B** that pass through the radial aperture block **308.** The second and third lenses **310** and **312** image the high-angle marginal rays **303B** to pass through a dichroic mirror **314** and onto a two-sided galvanometric mirror **316.** In some embodiments, the second and third lenses **310** and **312** are separated by the sum of their respective focal lengths. The galvanometric mirror **316** redirects and scans the high-angle marginal rays **303B** through a fourth lens **318** in line with a tube lens **320** and onto the back focal plane of a high numerical aperture objective lens **322.** This optical arrangement produces a structured illumination that does not propagate into the sample **324,** but evanescently excites the sample **324** with the high-angle marginal rays **303B** being imaged onto the sample **324** by the objective lens **322.** Since the high-angle marginal rays **303B** impinge upon the sample **324** at an angle that exceeds the critical angle, the high-angle marginal rays **303B** do not propagate into the sample **324,** instead causing only an evanescent wave that decays exponentially within the sample **324.** The evanescent wave (caused by the high angle, marginal rays **303B** that are created by the radial annular block **308)** produces very sharp/high contrast excitation at the sample **324.** In some embodiments, the objective lens **322** may have a numerical aperture > 1.4 NA (i.e. greater than the refractive index of the sample), such as 1.65 NA or 1.70 NA.

The resulting excitation **305** generated by the sample **324** scanned by the galvanometer mirror **316** produces a patterned fluorescence emission **305A** that may be collected in epi-mode, and then descanned by the galvanometric mirror **316** as the fluorescence emissions **305A** are imaged by the arrangement of the objective lens **322,** tube lens **320** and fourth lens **318** aligned with the galvanometric mirror **316.** The fluorescence emissions **305A** are then separated from the resulting excitation **305** via the dichroic mirror **314** that redirects the fluorescence emission **305A.**

In some embodiments, a fifth lens **326** is positioned one focal length from the galvanometric mirror **316.** The fifth lens **326** focuses the descanned fluorescence emission **305A** through a micro lens array **328.** In some embodiments, the micro lens array **328** has a pitch/pattern and lens spacing such that the fluorescence emissions **305A** are locally contracted into contracted fluorescence emissions **305B** without inversion or changing the relative distance between adjacent fluorescence emissions **305A.**

When the contracted fluorescence emissions **305B** are locally contracted the "contraction factor" depends on the respective wavelengths of the excitation beam **303** and fluorescence emissions **305A**, the pattern displayed on the spatial light modulator **304**, and the characteristics of the radial aperture block **308**, and in most cases, may be set at a value of 2. In some embodiments, a sixth lens **334** is positioned between opposing first and second mirrors **330** and **332.** The sixth lens **334** is positioned one focal length from the contracted fluorescence emissions **305B** and the galvanometer mirror **316** and serves to Fourier-transform the contracted fluorescence emissions **305B** onto the galvanometer mirror **316.** In this arrangement, the galvanometer mirror **316** and the seventh lens **338** serve to rescan the contracted fluorescence emissions **305B** that forms an image onto a detector component **340**, such as a camera, to capture the image.

In some embodiments, an emission filter **336** may be interposed between the second mirror **332** and the galvanometer **316** to remove any residual resulting excitation **305** from the contracted fluorescence emissions **305B.**

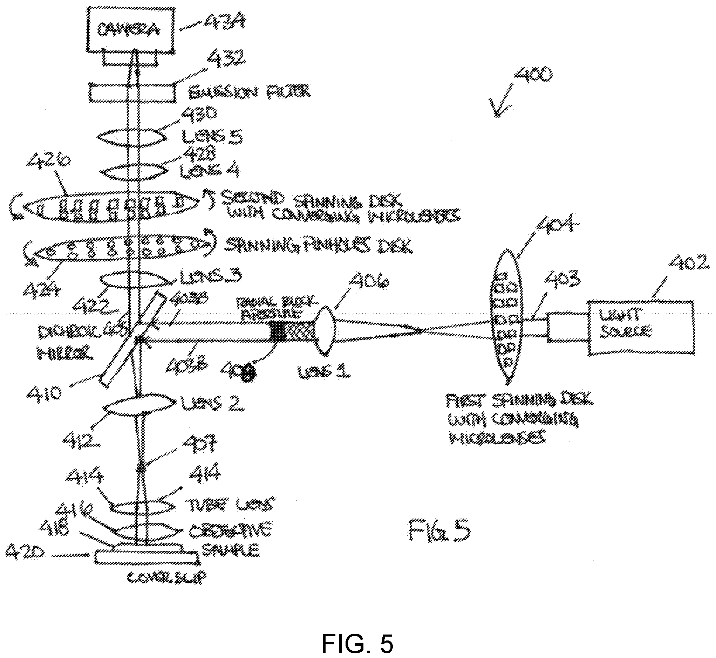

Referring to FIG. **5**, a fourth embodiment of the instant TIRF/SIM system, designated **400,** implements a spinning disk arrangement of the instant TIRF/SIM system **400.** In this embodiment, the instant TIRF/SIM system **400** includes an excitation source **402**, for example a laser component, that generates an excitation beam **403** which is transmitted through a first spinning disk **404** of converging microlenses that produces a plurality of excitation foci **403A** in which the excitation foci **403A** cover the entire imaging field of a sample **418.** As shown, in some embodiments a first lens **406** forms a telescopic arrangement with second lens **412** that relays the plurality of excitation foci to an intermediate image plane **407** after reflecting off a dichroic mirror **410** that is positioned between the first lens **406**, which is located one focal length away from the plurality of excitation foci **403A**, and the second lens **412.** In addition, a radial aperture block **408** is positioned at the co-focal point between the first lens **406** and the second lens **412** in order to filter low angle excitation foci **403A** that would otherwise produce subcritical, propagating excitation foci into the sample **418.** As noted above, the radial aperture block **408** blocks central rays of the excitation foci **403A** emerging from the first lens **406**, thereby allowing only high-angle, marginal rays **403B** emerging from the first lens **406** to pass through the radial aperture block **408.**

As further shown, the high-angle, marginal rays **403B** are relayed from the intermediate image plane **407** to the sample **418** via the telescope formed by the arrangement of a tube lens **414** and the objective lens **416.** The objective lens **416** may have a higher NA than the refractive index of the sample **418,** e.g., numerical aperture greater than 1.33, to ensure TIRF conditions are produced. In some embodiments, the focal lengths and placement of the second lens **412** and the tube lens **414** may be chosen so that the radial aperture block **408** is imaged to the back focal plane of the objective lens **416.** Once the sample **418** is illuminated by the high-angle, marginal rays **403B,** the fluorescent emissions **405** emitted by the sample **418** is collected in epi-mode and relayed through the second lens **412** and then a third lens **422** (after passing through the dichroic mirror **410)** to a spinning pinhole disk **424** having the same pitch/spacing as the first spinning disk **404** with converging microlenses. The spinning pinhole disk **424** serves to reject scattered fluorescent emissions **405** and unwanted sidelobes in the fluorescent emissions **405.** After the fluorescent emissions **405** pass through the spinning pinhole disk **424,** a second spinning disk **426** with converging microlenses having the same pitch/spacing as the spinning pinhole disk **424** and first spinning disk **404** is used to locally contract each fluorescent foci of the fluorescent emissions **405** with a contraction factor of approximately 2 using the scaling operation illustrated in FIGS. **18** and **19****,** thereby producing contracted, non-inverted fluorescent foci **405A.** The respective focal lengths of the first and second spinning disks **404** and **426** and the placement of the second spinning disk **426** are chosen to locally contract the fluorescent foci of the fluorescent emissions **405** the desired degree without inverting the fluorescent foci with respect to the overall image of the sample **418.** Finally, the contracted, non-inverted fluorescent foci **405A** are relayed to an imaging camera **434** via a final telescope arrangement of a fourth lens **428** and fifth lens **430.** In some embodiments, an emission filter **432** may be positioned in the emission path to reject excitation light. In some embodiment, the first and second spinning disks **404** and **426** and the spinning pinhole disk **424** may be spun in tandem to produce a super-resolution image during a single camera exposure. In some embodiments, the sample **418** may be disposed on a coverslip **420** when illuminated by a high angle, marginal rays **403B.**

### TEST RESULTS

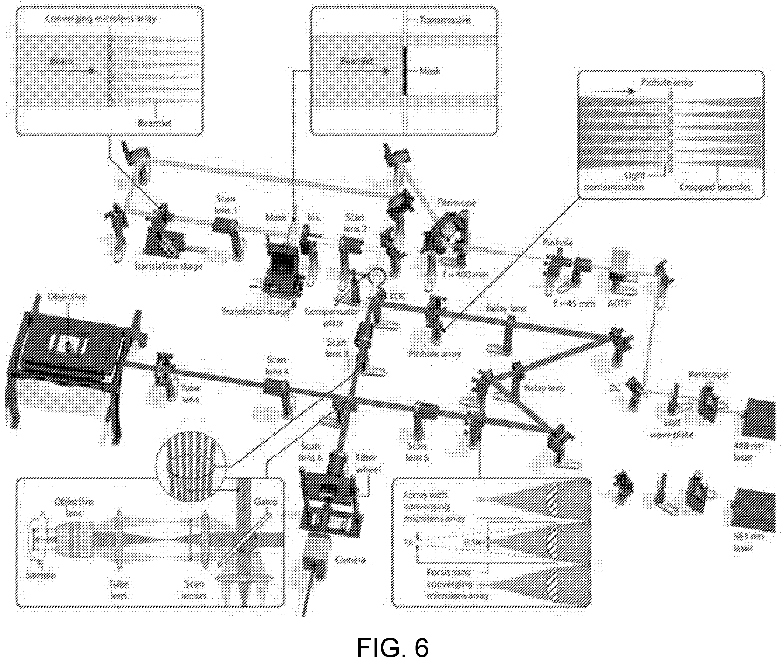

Referring to FIG. **6****,** a working model used for testing of the instant TIRF/SIM system **100** is illustrated. In some embodiments, the instant TIRF/SIM system **100** includes a pair of 488 nm and a 561 nm lasers which are combined and passed through an acousto tunable filter (AOTF) for shuttering, expanding the beam and spatially filtering (e.g., f - 45 mm and f = 400 mm achromats with 100 µm pinhole placed at the co-focal point between the lenses) and directed to an excitation microlens array. In addition, an opaque circular mask was positioned at the co-focal point between scan lens 1 and scan lens 2 (e.g., one focal length from the excitation foci produced by the microlens array) that collectively functioned to block subcritical excitation rays, thereby producing annular illumination of the sample. For clarity, only on-axis excitation foci produced by the central microlenses are illustrated after the mask. As shown, scan lens 2 and scan lens 3 relay the mask to a two-sided galvanometric mirror after passing through a compensator plate for reducing astigmatism that would otherwise result as the excitation foci is transmitted through a thick dichroic mirror. A tube lens in combination with scan lens 4 was used to further magnify and relay the mask to the back focal plane of a high NA objective (e.g., NA = 1.7). The scanning of the galvanometric mirror translates the TIRF excitation pattern at the sample. Once the sample was scanned and illuminated, fluorescence emissions from the sample were collected along the same optical path, descanned from the galvanometric mirror and reflected off of the dichroic mirror. Emission-side optics are nearly identical to those used in the description of the instant TIRF/SIM system **100.** Note that the distances and ray diagrams shown in FIG. **6** are approximate renderings.

As noted above, TIRF is enabled when highly inclined light with incidence angle Θ ≥ = Θ_{C} = arcsin (n₂/n₁) impinges upon the boundary between media with indices n₁ and n₂, with n₁ > n₂. The inventors reasoned that placing an annular mask at a Fourier image plane (optically conjugate to the back focal plane of the objective) would block all subcritical rays, thereby enforcing TIRF without otherwise perturbing the speed and functionality of the original instant SIM system. Annular illumination has been used to produce a single TIRF spot in diffraction-limited and stimulated emission depletion microscopy, yet for parallelized instant SIM an array of spots is needed.

The inventors created such a pattern by placing an annulus one focal length away from the foci produced by our excitation microlens array, thus filtering out low angle rays in each excitation focus simultaneously. The resulting beams were relayed to the sample by previous instant SIM optical components, including a two-sided galvanometric mirror conjugate to the back focal plane of the objective (a 1.7 numerical aperture (NA) lens used for the large range of accessible Θ ≥ = Θ_{C}, facilitating TIRF). Emission optics were near identical to the original instant SIM setup (Methods), and included pinhole- and emission microlens arrays with appropriate relay optics as shown in FIG. **6****.**

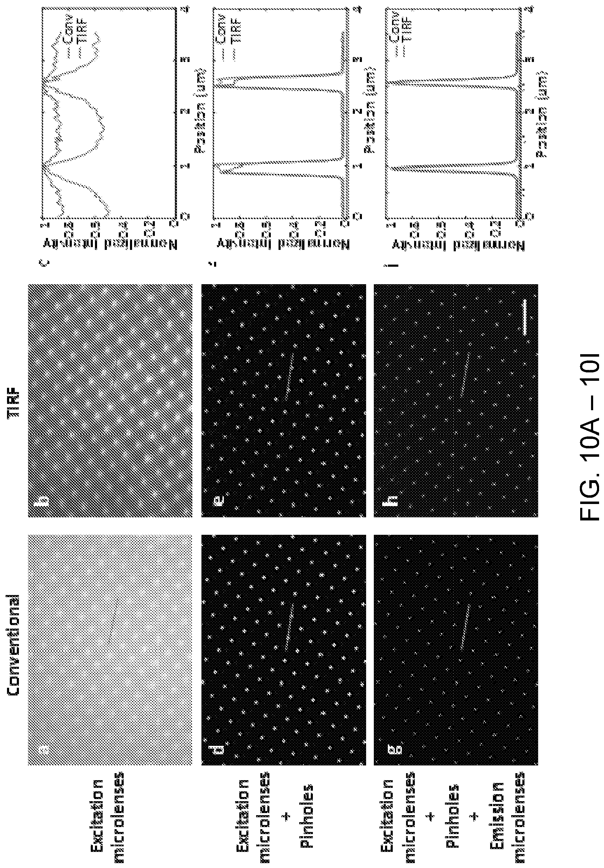

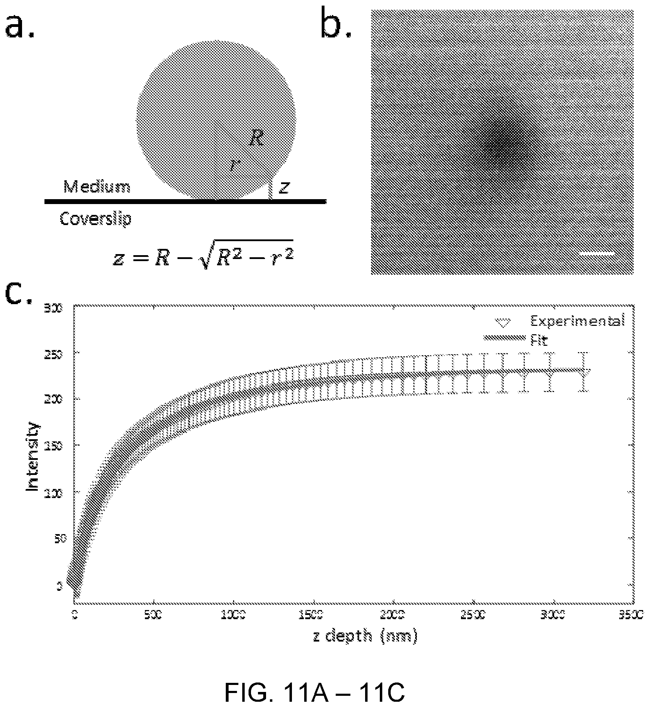

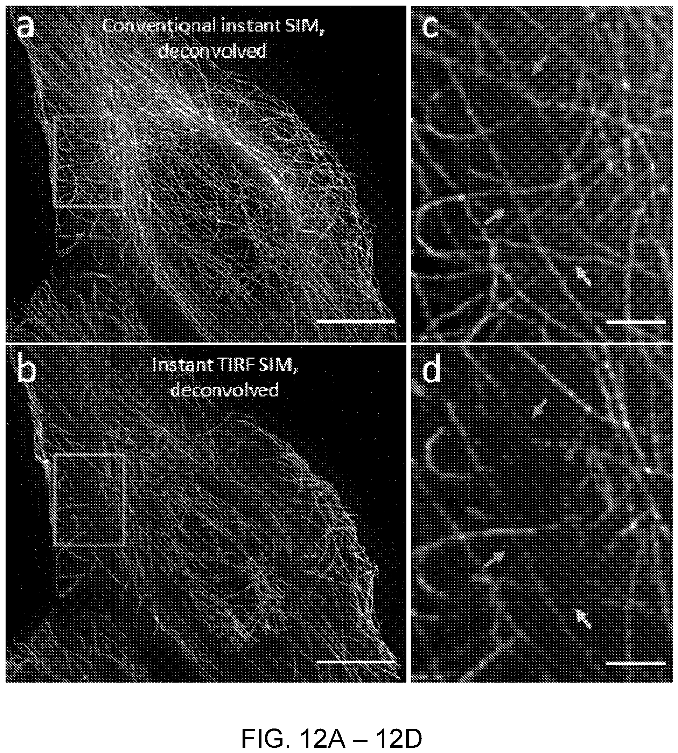

Since annular excitation produces a focused spot with pronounced sidelobes (due to the Bessel-like character of the excitation), the inventors were concerned that interference between neighboring foci and transfer of energy from the central intensity maxima to sidelobes would significantly diminish illumination contrast in the focal plane. Indeed, when imaging fluorescent dye in TIRF mode, substantial background fluorescence was observed between excitation foci (albeit still less than observed when imaging conventionally, due to the dramatic reduction of out-of-focus fluorescence in TIRF). However, individual foci were sharply defined and the extraneous background could be readily removed with the pinhole array intrinsic to the setup as shown in FIGS. **10A - 10I****.** The tests confirmed that TIRF was maintained during the imaging process by measuring the depth of the evanescent field with index-matched silica beads as shown in FIGS. **11A - 11C****,** which found this value to be 123 nm (117 nm, 129 nm, 95% confidence interval). Qualitative comparisons on fixed microtubule samples also demonstrated the improved sectioning in TIRF relative to conventional instant SIM are shown in the images of FIGS. **12A - 12D****.**

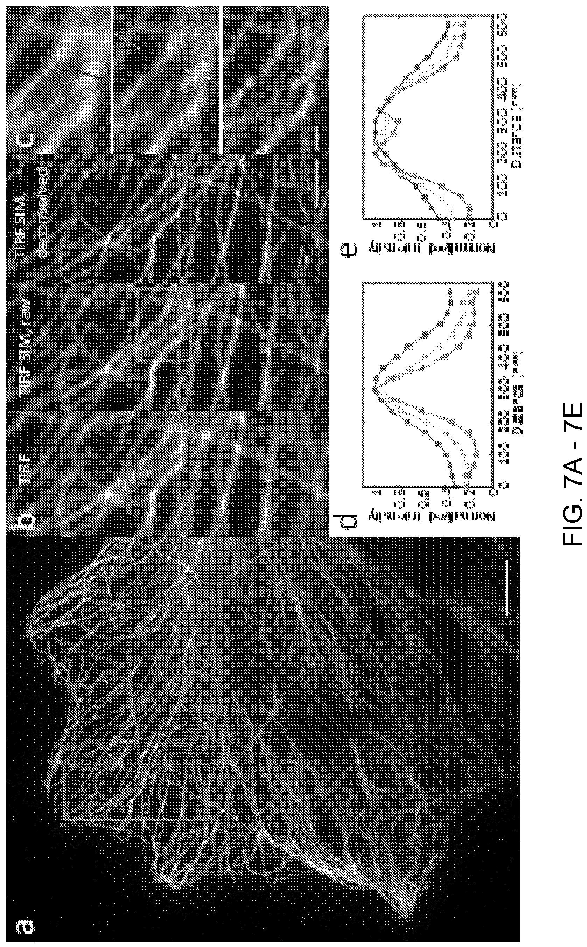

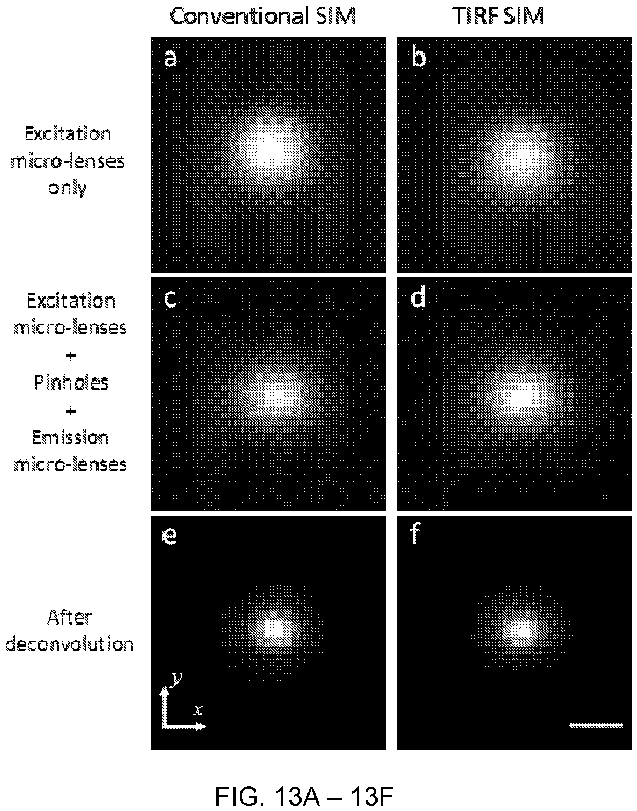

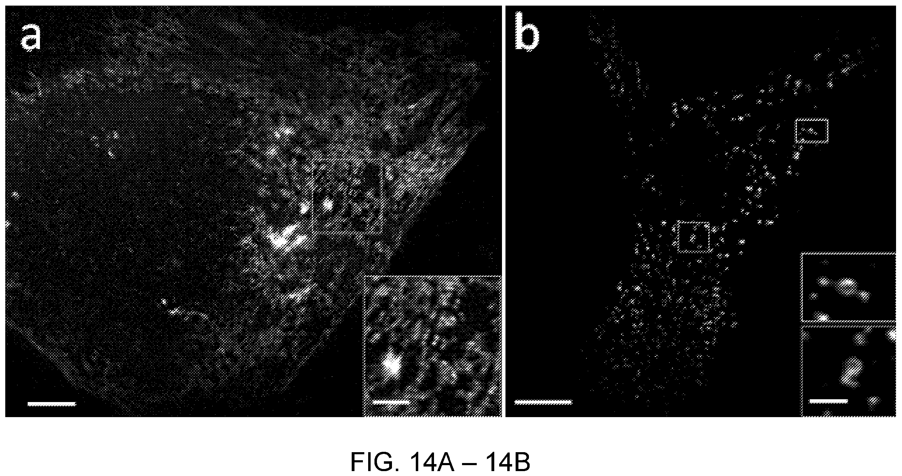

The test system measured system resolution on 100 nm fluorescent beads shown in FIGS. **13A - 13F****.** With scanned TIRF excitation only, the fluorescent beads were resolved to 249 +/- 11 nm (N = 20 beads). Performing operations, such as descanning, pinholing, locally contracting, and rescanning reduced the apparent fluorescent bead diameter to 194 +/- 20 nm, and resolution could be further improved after deconvolution (10 iterations, Richardson-Lucy deconvolution) to 115 +/- 13 nm. These results were similar to those obtained using conventional illumination with the same objective lens, i.e. with conventional instant SIM implying that the spatial resolution did not degrade in TIRF. Images of fixed cells further confirmed this progressive resolution improvement as shown in FIGS. **7A-****7E**, as individual microtubules had an apparent width of ∼128 nm (FIG. **7D**) and the inventors were able to distinguish microtubules spaced 134 nm apart (FIG. **7E**). Qualitative tests in living cells confirmed this resolving power (FIGS. 14A and 14B), as individual GFP-labeled myosin IIA heads and void areas within GFP-FCHO2 puncta, subdiffractive structural features that have previously been resolved with TIRF/SIM were discerned.

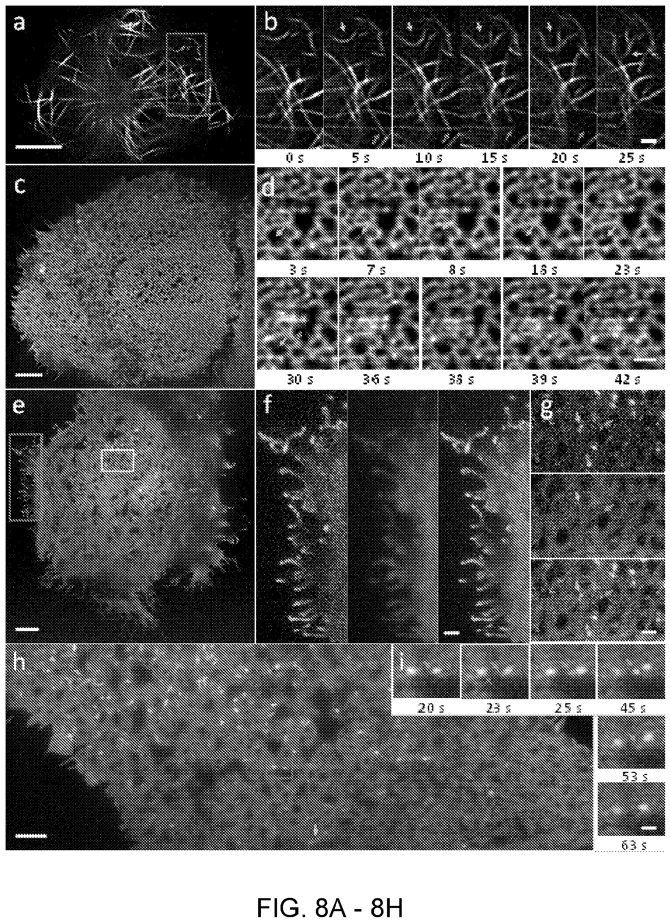

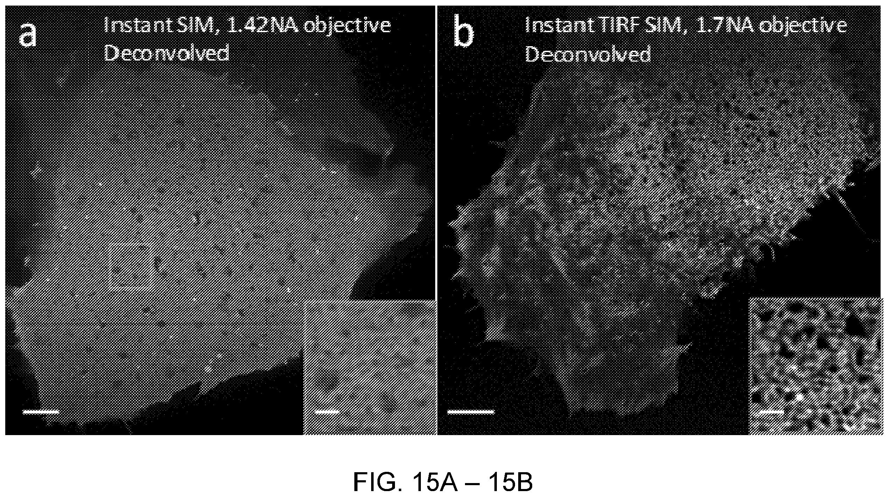

The test used the instant TIRF/SIM system **100** to examine the dynamics of protein distributions in living cells (FIGS. **8A - 8H****).** First, the test recorded microtubule dynamics over 500 time-points by imaging 3X-EGFP-EMTB in Jurkat T cells after they settled on anti-CD3 antibody coated coverslips (FIG. **8A**). The imaging rate of 20 Hz was sufficient to easily follow buckling, shortening, and sliding of microtubule bundles at the base of the cell within the evanescent TIRF field (FIG. **8A**). As a second example, the test recorded the dynamics of the small GTPase HRas, which is lipidated and then targeted to the plasma membrane15. Images were acquired every 0.75 s over 100 timepoints in U2OS cells (FIG. **8C**). Intriguingly, GFP-HRas localized in highly active microdomains at the plasma membrane (FIGS. **8C** and **8D**). The high spatiotemporal resolution of the technique revealed rich dynamics of this reticulated pattern, as the test observed reorganization of domains on the second timescale, including transient 'filling in' of the void areas between microdomains (FIG. **8D**), and coordinated, 'wave-like' motion between microdomains. Neither the distribution nor the dynamics of Ras have been previously reported at this length scale in living cells, perhaps due to the lack of spatial resolution or optical sectioning (e.g. in conventional instant SIM at lower NA, microdomains were poorly resolved (FIGS. **15A** and **15B**).

The test also imaged Halotag-HRAS (labeled with Janelia Fluor 54916) in combination with GFP-VSVG (FIG. **8E**), highlighting the ability of instant TIRF SIM for live, dual-color imaging at the plasma membrane. VSVG showed some localization around Ras microdomains within the cell interior (FIG. **8G**), but the inventors also observed preferential enrichment of VSVG at the cell boundary, particularly at cell filopodia and filamentous structures. In a second dual-color example, GFP-HRAS was imaged with dsRED-ER (FIG. **8H**), marking the endoplamic reticulum (ER). Given the optical sectioning of the technique, the ER mostly appeared as a set of punctate spots and occasional tubules, presumably representing ER proximal to the plasma membrane. Although punctate ER structures occasionally colocalized with Ras, the protein distributions were mostly distinct and exhibited different dynamics consistent with their differential localization and function within the cell. The spatial resolution of the technique proved helpful in resolving the fission of Ras microclusters adjacent to more stable ER contacts, a phenomenon otherwise obscured by diffraction (FIG. **8I**).

The test allowed visualization of intracellular calcium flux, actin, and myosin IIB dynamics in live cells. These examples all underscore the ability of instant TIRF SIM to enable super-resolution imaging well matched to the dynamics of interest, either matching or surpassing the image acquisition rate offered by more classic TIRF SIM systems.

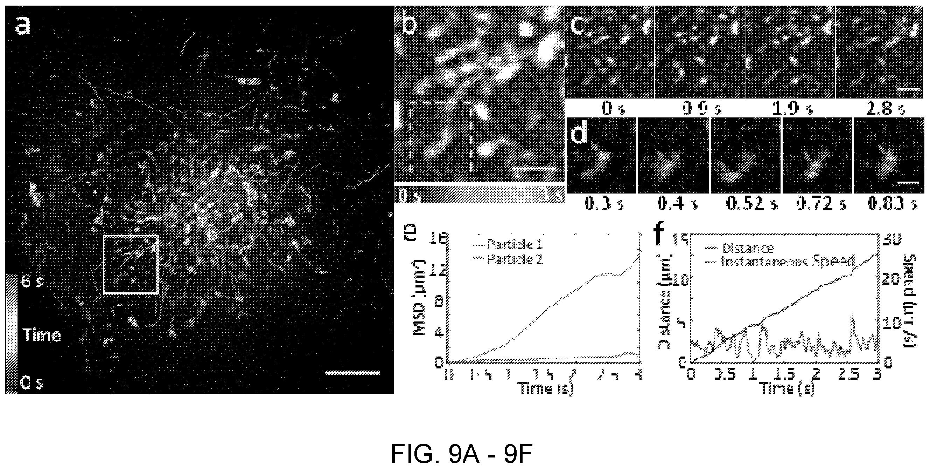

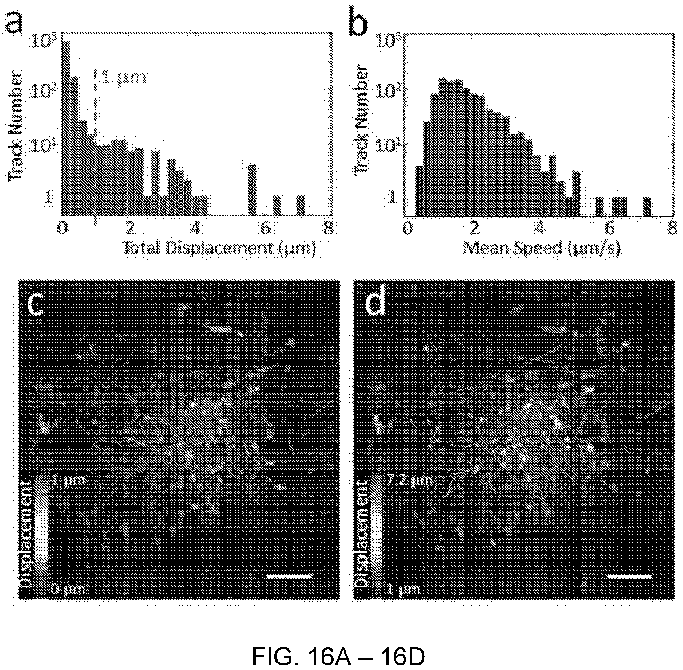

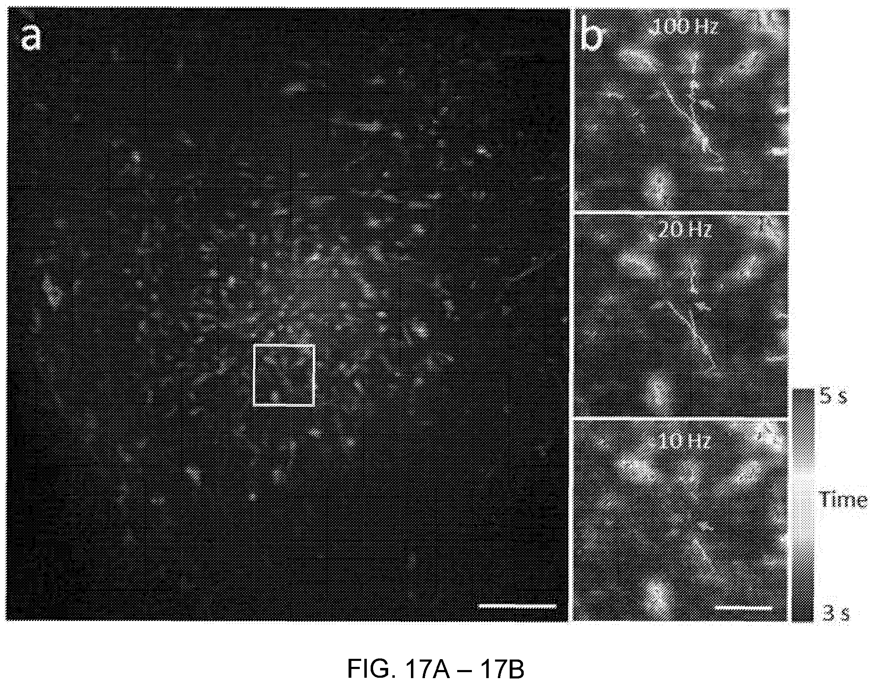

A key advantage, however, in instant SIM is the ability to image at much faster frame rates since the super-resolution image is formed in a single camera exposure. To illustrate this capability, the test imaged GFP-Rab11 in U2OS cells at 37°^{C} at 100 Hz. This imaging rate was sufficient to visualize and track the rapid motion of 980 Rab11 decorated particles (FIG. **9A**). An analysis of track motion revealed that the majority of particles underwent < 1 µm displacement over our 6 seconds imaging period; yet, tens of particles were observed that showed greater displacements (FIGS **16A-16D****).** It was observed that particles that traveled further also traveled faster, with mean speed greater than 1 µm/s (FIGS **16A-16D****)** and instantaneous speed in some cases exceeding 10 µm/s (FIGS. **9D** and **9F**). A closer analysis at the single particle level shown in FIGS. **9B** and **9C** also revealed qualitative differences in particle motion, with some particles undergoing diffusive motion, as revealed by a linear mean square displacement (MSD) vs. time and others showing supralinear MSD vs. time (FIG. **9E**) with bouts of directed motion illustrated in FIG. **9D**. It was noted that imaging at slower frame rates would artificially shorten track lengths, offering a less accurate representation of the underlying motion (FIGS. **17A** and **17B****).**

The Instant TIRF-SIM system **100** provides fundamentally faster operation than classic TIRF-SIM systems, as only one image needs to be acquired, instead of the standard nine. Additional advantages of the implementation over alternative approaches include less read noise (since fewer images are acquired) and less computational processing (the method requires only simple deconvolution of the raw images, instead of extensive image processing in Fourier space). Although the spatial resolution we report (∼115 nm) is ∼40% less than claimed in previous state of the art linear TIRF-SIM, the existing implementation of instant TIRF-SIM is ∼50 fold faster, as the test shown in FIG. **9** demonstrated by imaging at frame rates up to 100 Hz

### Methods - Instant TIRF-SIM

The instant TIRF SIM **100** used a 1.7 NA objective (Olympus, APON100XHOTIRF) for excitation and detection. When imaging into aqueous samples with refractive index 1.33, 1-(1.33/1.7) = 0.22 of the objective back focal plane diameter (*d*_{BFP}) is available for TIRF, implying that sub-critical illumination rays within a diameter 0.78 * *d*_{BFP} = 0.78 * 2 * NA_{OBJ} * *f*_{OBJ} = 0.78 * 2 * 1.7 * 1.8 mm = 4.77 mm must be blocked. Second, a relay system was inserted into the excitation arm of the instant SIM to block these rays. Excitation from 488 nm and 561 nm lasers was combined and beam expanded as before, and directed to a microlens array (Amus, f = 6 mm, 222 mm spacing between microlenses, 1 mm thick, 25 mm diameter, antireflection coated over 400-650 nm, APO-Q-P222-F6(633)+CHR) to produce an array of excitation foci. The test used a matched pair of scan lenses (Scan lens 1 and 2, f=190 mm, Special Optics, 55-S190-60-VIS) placed in 4*f* configuration to relay these excitation foci to the rest of the optical system, inserting an opaque circular mask (Photosciences, 2.68 mm diameter chrome circle with optical density 5 on 4" x 4" x 0.090" quartz wafer) at the focal point between scan lenses (and the Fourier plane of the excitation foci produced by the microlens array) to filter subcritical rays. Given the 350 mm/ 190 mm = 1.84x magnification between mask and the back focal plane of the objective, the mask was designed to block the central 2.68 mm * 1.84 = 4.93 mm diameter of the illumination. An iris placed just after the mask ensured that the outer diameter of the beam was -3.33 mm, a diameter that magnified to 3.33 * 1.84 = 6.13 mm, or ∼*d*_{BFP}, thereby reducing stray light that would otherwise fall outside the objective back focal plane. Alignment of the opaque mask and microlens array were greatly aided by placing the former on a 3-axis translation stage (Thorlabs, LT3, used for correct positioning of the mask image at the back focal plane) and the latter on a uniaxial translation stage (Thorlabs, LNR50M, used to position excitation foci precisely at the focal plane of the objective lens). An alignment reticle (Leica) that screwed into the objective turret was used to further check that the annular illumination pattern was properly positioned (concentric with the optical axis of the objective) and focused at the back focal plane of our objective.

In the emission path, optics were identical to the previous instant SIM design, except that a pinhole array with larger pinholes (Photosciences, Chrome on 0.090" thick quartz, 222 µm pinhole spacing, 50 µm pinhole diameter) and an emission side microlens array with longer focal length (f = 1.86 mm, Amus, APO-Q-P222-F1.86(633)) were used. The total magnification between sample and our scientific grade complementary metal-oxide semiconductor camera (PCO-TECH, pco.edge 4.2) detector was 350 mm / 1.8 mm = 194.4, resulting in an image pixel size of 33.4 nm. These elements are shown in FIG. **6****.**

The excitation laser power was measured immediately prior to the objective. Depending on the sample, the average power ranged from 0.2 - 2 mW, implying an intensity range from ∼7 - 70 W/cm² (given the 58 µm x 52 µm field of view).

Samples were deposited on 20 mm diameter high index coverslips (Olympus, 9-U992) designed for use with the 1.7 NA lens. Coverslips were mounted in a magnetic chamber (Live Cell Instrument, CM-B20-1) that attached to the microscope stage. For temperature maintenance at 37 °C, the magnetic chamber was mounted within an incubation chamber (Okolab, H301-MINI).

### Estimating the evanescent field depth

The inventors used two methods to estimate evanescent field depth. First, an analytical method was used. For excitation of wavelength 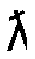 impinging at angle Θ₁ upon an interface with indices n₁ and n₂, n₁ > n₂, the intensity I of an evanescent field decays along the optic axis with decay constant d according to I(z) = lₒexp(-z/d), with 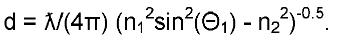 The term n₁²sin²(Θ₁) is equivalent to the square of an 'effective' NA, in our case ≤ 1.7. If considering the smallest angles in the annular excitation (corresponding to the inner radius used in the mask, and producing evanescent waves with the longest decay length), this effective NA is 4.93/6.12 * NA_{OBJ} = 1.37. Assuming n₂ = 1.33 and 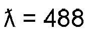 nm leads to d = 118 nm. If considering the largest angles (corresponding to the outer annulus radius, producing evanescent waves with the shortest decay length), the effective NA is NA_{OBJ} = 1.7, leading to d = 37 nm. By these simple calculations, the 'average' decay thus lies between 37 nm - 118 nm, and is weighted by the distribution of intensity in the annular excitation.

Since such an intensity distribution is difficult to measure accurately, the inventors instead opted to more directly measure the average evanescent decay length using silica beads (diameter 7.27 µm, refractive index, 1.42, Bangs Laboratories) placed in a solution of fluorescein dye (Fluka, Cat #32615) (FIG. **11A**). In this method, the known diameter of the bead is used to convert the apparent radii observed with TIRF to an axial depth, z (FIG. **11B**). Following previous work, the inventors integrated the intensity I(z) from the coverslip surface to some depth z, as this corresponds to the observed signal F(z) at each depth. First, the inventors assumed the fluorescence is well modeled by a sum of two exponentials. The first term corresponds to signal derived from 'pure' TIRF (with decay d) and the second term models scattering that is known to contaminate objective-type TIRF (with decay D): $I \left(z\right) = Aexp \left(-z/d\right) + Bexp \left(-z/D\right) ,$ where A and B are constants that account for incident beam intensity, concentration, and the relative weight of the scattering term. Integrating this expression yields $F \left(z\right) = Ad ( 1 - exp \left(-z/d\right) + BD ( 1 - exp \left(-z/D\right) .$

Fitting the measured fluorescence intensity at each depth (derived at each bead radius) to this expression (FIG. **11C**) with the Matlab curve fitting toolbox gave d = 123 nm with 95% confidence interval (117nm, 129 nm). The scattering amplitude B represented ∼24 % of the signal.

### DATA PROCESSING

### Deconvolution

Unless otherwise indicated, data presented in this test were deconvolved to further enhance spatial resolution. Before deconvolution, background was subtracted from the raw images. Background was estimated by averaging 100 'dark' images acquired without illumination. For deconvolution, the inventors used the Richardson-Lucy algorithm, blurring with a 2D PSF:
For *i* = 1,2, ... *N* ${Estimate}_{New} = {Estimate}_{Previous} \times Blur \left(\frac{{Image}_{Measured}}{Blur \left({Estimate}_{Previous}\right)}\right)$

The PSF was experimentally derived by registering and then averaging the images of 20 100 nm yellow-green beads. Deconvolution was implemented in MATLAB 2017a with the number of iterations N set to 10.

### Tracking

For tracking the particles in the Rab11 dataset (FIGS. **9A-9F**), the inventors performed semi-automated tracking using the TrackMate ImageJ Plugin (https://imagej.net/TrackMate). For particle detection, the Difference of Gaussian (DoG) detector was used with estimated blob diameter of 0.3 µm, and an initial quality threshold of 120. The particles were further filtered and linked with a simple Linear Assignment Problem (LAP) linker. Linking maximum distance and Gap-closing maximum distance were set to 0.3 µm, and the maximum frame gap was set to 5. For tracking on the whole image (FIGS. **9A-9F**), the linking filters were manually adjusted to filter out obviously spurious tracks. Then manual editing was performed within the plugin interface to improve tracking results. For the cropped region used for downsampling analysis (FIGS. **17A** and **17B**), images were downsampled 5 times and 10 times in the time domain. Then automated tracking was performed independently for the cropped images (100Hz) and the downsampled images (20 Hz and 10 Hz) without manually adjusting either linking filters or links.

From the particle tracks (i.e., the sequences of coordinates denoting the position of each tracked particle at each time point), the inventors computed several quantitative metrics including displacement, distance, instantaneous speed, mean speed and mean squared displacement (MSD).

Given a trajectory consisting of *N* time points and the particle coordinates at *i*th time point *pᵢ* - (*xᵢ*,*yᵢ*), the distance between any two points *pᵢ* and *pⱼ* is defined as the Euclidean norm: $d \left({p}_{i}, {p}_{j}\right) = ‖ {p}_{i} - {p}_{j} ‖$

The total distance traversed at the *j*th time point is calculated from the starting point (the 1st time point) and defined as:

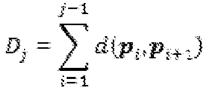

and the displacement (magnitude), also known as net distance *Fⱼ* = *d*(***p***₁,***p**ⱼ*)

Then the total distance for the whole trajectory is *D_{N}* and the total displacement for the whole trajectory is *F_{N}*.

The instantaneous speed is defined as: ${v}_{i} = \frac{d \left({p}_{i}, {p}_{i + 1}\right)}{Δ t}$

where Δ*t* is the time interval between two successive time points. The instantaneous speed is also the derivative of the traveled distance *Dⱼ*.

Then the mean speed is calculated as the average of the instantaneous speed: $\overline{v} = \frac{1}{N - 1} {\sum }_{i = 1}^{N - 1} {v}_{i}$

The mean squared displacement is calculated as

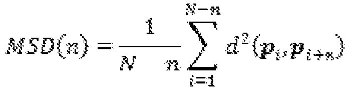

### Bleach correction

For several time-lapse datasets (FIGS. **8A-8H** and FIGS. **9A-****9F),** the inventors performed standard bleaching correction using an ImageJ Plugin (Bleach Correction, https://imagej.net/BleachCorrection) with the 'simple ratio' method.

### Flat fielding

Due to the spatially nonuniform profile of the excitation laser beam, the excitation intensity in both conventional- and the instant TIRF-SIM **100** is not distributed uniformly even when the excitation is scanned. The scanned excitation distribution has highest intensity in the center of the field of view and diminishes at increasing distances perpendicular to the scanning direction. In an attempt to normalize for this variation in excitation intensity ('flat fielding'), in some of the datasets (FIGS. **8A-8H****,** FIGS. **9A-9F****,** FIGS. **14A-14B****,** FIGS. **16A-16D****,** and FIGS. **17A-17B**) the test averaged 100 images of a thin fluorescein layer, smoothed the average perpendicular to the scan direction, and divided the raw data by this smoothed average prior to deconvolution.

## Claims

1. A system (100) for structured illumination microscopy comprising:
a light source (102) for generating an excitation light beam (104);
a first micro lens array (106) for splitting the excitation beam (104) into an array of excitation foci (104A);
a first lens (108) aligned along the first axis and positioned one focal length away from a focal point of the first micro lens array (106), the first lens (108) focusing the array of excitation foci (104A);
a radial aperture block (110) aligned along the first axis positioned at a front focal plane of the first lens (108), the radial aperture block (110) being configured to block a plurality of low-angle central rays (104C) of the array of excitation foci (104A), while allowing a plurality of high-angle, marginal rays (104B) of the array of excitation foci (104) to pass through the radial aperture block (110), wherein the high-angle marginal rays (104B) are focused by the first lens (108) along a high-angle and low-angle central rays (104C) are focused by the first lens (108) along a low-angle;
a galvanometric mirror (118) aligned and positioned for redirecting and scanning the high-angle, marginal rays (104B) through an objective lens (124) for focusing the redirected high-angle, marginal rays (104B) along a sample (125) that generates an excitation (105) by the sample (124) and then the excitation (105) from the sample (125) is rescanned to generate patterned fluorescence emissions (105A) onto a second microlens array (128) for locally contracting the patterned fluorescence emissions (105B) into a contracted pattern of fluorescence emissions (105B), wherein the high-angle marginal rays (104B) evanescently excite the sample (125); and
a mirror arrangement (130, 154) for redirecting the contracted patterned fluorescence emissions (105B) onto a detector (140) for detecting the patterned fluorescence emissions (105B) emitted by the sample (125).

2. The system (100) of claim 1, further comprising:
a second lens (112) and a third lens (114) positioned between the radial aperture block (110) and the dichroic mirror (116), wherein the second and third lenses (112, 114) collectively image the high angle, marginal rays (104B) onto the galvanometric mirror (118).

3. The system (100) of claim 1, wherein the local contraction of the patterned fluorescence emissions (105B) is based on a contraction factor set by the respective wavelengths of the excitation beam (104) and the patterned fluorescence emissions (105B) and the physical characteristics of the radial aperture block (110).

4. The system (100) of claim 3 wherein the contraction factor is set at a value of approximately 2.

5. A system (200) for structured illumination microscopy comprising:
a light source (202) for generating an excitation light beam (204);
a first micro-lens array (206) for splitting the excitation beam (204) into an array of excitation foci (204A);
a first lens (208) aligned along the first axis and positioned one focal length away from a focal point of the first micro-lens array (206), the first lens (208) focusing the array of excitation foci (204A);
a digital micro-mirror device (210) positioned at a front focal plane of the first lens (208), the digital micro-mirror device (210) being operable to reflect a plurality of low-angle central rays of the array of excitation foci (204A) off axis relative to an axis defined by the digital micro-mirror device such that only high-angle marginal rays (204B) that are focused by the first lens (208) along a high-angle are not reflected by the digital micro-mirror device (210);
a galvanometric mirror (218) positioned for redirecting and scanning the high-angle, marginal rays (204B) through an objective lens (224) for focusing the redirected high-angle, marginal rays (204B) along a sample (225) that generates an excitation (205) by the sample (225) and then the excitation (205) from the sample (225) is rescanned by the galvanometric mirror (218) to generate a patterned fluorescence emissions (205A) onto a second microlens array (228) for locally contracting the patterned fluorescence emissions (205A) into a contracted patterned fluorescence emissions (205B), wherein the galvanometric mirror (218) scans the high-angle marginal rays (204B) onto a back focal plane of an objective lens (224) that produces a structured illumination that evanescently excites the sample (225); and
a mirror arrangement (230, 234) for redirecting the contacted patterned fluorescence emissions (205B) onto a detector for detecting the patterned fluorescence emissions (204A) emitted by the sample.

6. The system of claim 5, wherein the number and location of the plurality of pixels in the reflective zone is varied such that the thickness of an evanescent field at the sample (225) is also varied.

7. A system (300) for structured illumination microscopy comprising:
a light source (302) for generating an excitation light beam (303);
a spatial light modulator (304) for controlling the phase of the excitation beam (303) for generating an array of excitation foci (304A) with minimal interference between each excitation foci (304A);
a first lens (306) positioned one focal length away from a focal point of the spatial light modulator (304), the first lens (306) focusing the array of excitation foci (304A);
a radial aperture block (308) aligned along the first axis positioned at a front focal plane of the first lens (306), the radial aperture block (308) being configured to block a plurality of low-angle central rays (303C) of the array of excitation foci (304A), while allowing a plurality of high-angle, marginal rays (303B) of the array of excitation foci (304A) to pass through the radial aperture block (308), wherein the high-angle marginal rays (303B) are focused by the first lens (306) along a high-angle and low-angle central rays (303C) are focused by the first lens (306) along a low-angle;
a galvanometric mirror (316) aligned and positioned for redirecting and scanning the high-angle, marginal rays (303B) through an objective lens (322) for focusing the redirected high-angle, marginal rays (303B) along a sample (324) that generates an excitation (305) by the sample (324) and then the excitation (305) from the sample (324) is rescanned to generate patterned fluorescence emissions (305a) onto a microlens array (328) for locally contracting the patterned fluorescence emissions (305A) into contracted patterned fluorescence emissions (305B), wherein high-angle marginal rays (303B) impinge upon the sample (324) at an angle that exceeds the critical angle the high-angle marginal rays (303B) do not propagate into the sample (324) causing only an evanescent wave to be produced that decays exponentially within the sample (324); and
a mirror arrangement (330, 332) for redirecting the contracted patterned fluorescence emissions (305B) onto a detector (340) for detecting the patterned fluorescence emissions (305B) emitted by the sample (324).

8. The system of claim 1 or 7, wherein the radial aperture block (308) is positioned at a plane conjugate to the back focal plane of the objective lens (322).

9. A system (400) for structured illumination microscopy comprising:
a light source (402) for generating an excitation light beam (403);
a first spinning disk (404) with a plurality of converging microlenses having a first pitch and spacing, the first spinning disk (404) in communication with the light source (402) for converting the excitation light beam (403) into a plurality of excitation foci (403A) in which the plurality of excitation foci (403A) cover an entire imaging field of a sample (420);
a first lens (406) in telescopic arrangement with a second lens (412) that relays the plurality of excitation foci (403A) to an intermediate image plane;
a radial aperture block (408) positioned at a focal point between the first lens (406) and the second lens (412), the radial aperture block (408) being operable to block low-angle central rays of the plurality of excitation foci (403A), while allowing high-angle, marginal rays (403B) of the plurality of excitation foci (403A) to pass through the radial aperture block (408), wherein the high-angle marginal rays (403B) are focused by the first lens (406) along a high-angle and low-angle central rays are focused by the first lens (406) along a low-angle;
a dichroic mirror (410) positioned between the first lens (406) and the second lens (412) for redirecting the plurality of high-angle, marginal rays (403B) through an objective lens (416) for focusing the redirected high-angle, marginal rays (403B) along the sample (418) that generates fluorescent emissions (405) by the sample (418), wherein the high-angle, marginal rays (403B) evanescently excite the sample (418);
a first spinning pinhole disk (424) in communication with the dichroic mirror (410), the first spinning pinhole disk (424) comprising a plurality of pinholes with the pitch and spacing of the first spinning disk (424), the spinning pinhole disk (424) being operable for receiving the fluorescent emissions (405) emitted by the sample (418) and blocking out of focus emissions or scattered light; and
a second spinning disk (426) with a plurality of converging microlenses positioned between the spinning pinhole disk (424) and the sample (418) for receiving the fluorescent emissions (405) transmitted through the spinning pinhole disk (424), the second spinning disk (426) with converging microlenses being operable to locally contract the fluorescence emissions (405) into contracted, non-inverted fluorescence emissions (405A), wherein the first and second spinning disks (424, 426) with converging microlenses and the spinning pinhole disk collectively spin in tandem.

10. The system of claim 9, wherein spinning in tandem of the first and second spinning disks (424, 426) with converging microlenses and the spinning pinhole disk produces a super-resolution image during a single camera exposure of the detector (434).

## Patentansprüche

1. System (100) für strukturierte Beleuchtungsmikroskopie, umfassend:
eine Lichtquelle (102) zur Erzeugung eines Anregungslichtstrahls (104);
ein erstes Mikrolinsenarray (106) zum Aufteilen des Anregungsstrahls (104) in ein Array von Anregungsmittelpunkten (104A);
eine erste Linse (108), die entlang der ersten Achse ausgerichtet ist und eine Brennweite vom Fokalpunkt des ersten Mikrolinsenarrays (106) weg entfernt positioniert ist, wobei die erste Linse (108) das Array von Anregungsmittelpunkten (104A) fokussiert; einen radialen Öffnungsblock (110), der entlang der ersten Achse ausgerichtet ist, die an einer vorderen Fokalebene der ersten Linse (108) positioniert ist, wobei der radiale Öffnungsblock (110) dafür ausgelegt ist, eine Mehrheit von zentralen Niedrigwinkelstrahlen (104C) des Arrays von Anregungsmittelpunkten (104A) zu blockieren, während es ermöglicht wird, dass eine Mehrheit von marginalen Hochwinkelstrahlen (104B) des Arrays von Anregungsmittelpunkten (104) durch den radialen Öffnungsblock(110) passieren können, wobei die marginalen Hochwinkelstrahlen (104B) von der ersten Linse (108) entlang einem Hochwinkel fokussiert werden und zentrale Niedrigwinkelstrahlen (104C) von der ersten Linse (108) entlang einem Niedrigwinkel fokussiert werden;
einen galvanometrischen Spiegel (118), der dafür ausgerichtet und positioniert ist, die marginalen Hochwinkelstrahlen (104B) durch eine Objektivlinse (124) umzuleiten und zu scannen, um die marginalen umgeleiteten Hochwinkelstrahlen (104B) zu fokussieren entlang einer Probe (125), die eine Anregung (105) durch die Probe (124) erzeugt, und dann wird die Anregung (105) von der Probe (125) wieder gescannt, um gemusterte Fluoreszenzemissionen (105A) auf ein zweites Mikrolinsenarray (128) zu erzeugen, um die gemusterten Fluoreszenzemissionen (105B) in ein zusammengezogenes Muster von Fluoreszenzemissionen (105B) lokal zusammenzuziehen, wobei die marginalen Hochwinkelstrahlen (104B) die Probe (125) abklingend anregt; und
eine Spiegelanordnung (130, 154) zum Umleiten der zusammengezogenen gemusterten Fluoreszenzemissionen (105B) auf einen Detektor (140) zum Detektieren der gemusterten Fluoreszenzemissionen (105B), die von der Probe (125) ausgestrahlt werden.

2. System (100) nach Anspruch 1, weiter umfassend:
eine zweite Linse (112) und eine dritte Linse (114), die zwischen dem radialen Öffnungsblock (110) und dem dichroitischen Spiegel (116) positioniert sind, wobei die zweite und dritte Linse (112, 114) gemeinsam die marginalen Hochwinkelstrahlen (104B) auf den galvanometrischen Spiegel (118) abbilden.

3. System (100) nach Anspruch 1, wobei die lokale Zusammenziehung der gemusterten Fluoreszenzemissionen (105B) auf einem Zusammenziehungsfaktor basiert, eingestellt durch die jeweiligen Wellenlängen des Anregungsstrahls (104) und die gemusterten Fluoreszenzemissionen (105B) und die physischen Eigenschaften des radialen Öffnungsblocks (110).

4. System (100) nach Anspruch 3, wobei der Zusammenziehungsfaktor bei einem Wert von ca. 2 eingestellt ist.

5. System (200) für strukturierte Beleuchtungsmikroskopie, umfassend:
eine Lichtquelle (202) zur Erzeugung eines Anregungslichtstrahls (204);
ein erstes Mikrolinsenarray (206) zum Aufteilen des Anregungsstrahls (204) in ein Array von Anregungsmittelpunkten (204A);
eine erste Linse (208), die entlang der ersten Achse ausgerichtet ist und eine Brennweite vom Fokalpunkt des ersten Mikrolinsenarrays (206) weg entfernt positioniert ist, wobei die erste Linse (208) das Array von Anregungsmittelpunkten (204A) fokussiert;
eine digitale Mikrospiegeleinrichtung (210), positioniert an einer vorderen Fokalebene der ersten Linse (208), wobei die digitale Mikrospiegeleinrichtung (210) bedient werden kann, um eine Mehrheit von zentralen Niedrigwinkelstrahlen des Arrays von Anregungsmittelpunkten (204A) von der Achse im Verhältnis zu einer Achse, definiert durch die digitale Mikrospiegeleinrichtung so abzureflektieren, dass nur marginale Hochwinkelstrahlen (204B), die von der ersten Linse (208) entlang einem Hochwinkel fokussiert werden, von der digitalen Mikrospiegeleinrichtung (210) nicht reflektiert werden;
einen galvanometrischen Spiegel (218), der dafür positioniert ist, die marginalen Hochwinkelstrahlen (204B) durch eine Objektivlinse (224) umzuleiten und zu scannen, um die marginalen umgeleiteten Hochwinkelstrahlen (204B) zu fokussieren entlang einer Probe (225), die eine Anregung (205) durch die Probe (225) erzeugt, und dann wird die Anregung (205) von der Probe (225) vom galvanometrischen Spiegel (218) wieder gescannt, um eine gemusterte Fluoreszenzemission (205A) auf ein zweites Mikrolinsenarray (228) zu erzeugen, um die gemusterten Fluoreszenzemissionen (205B) in ein zusammengezogenes Muster von Fluoreszenzemissionen (205B) lokal zusammenzuziehen, wobei der galvanometrische Spiegel (218) die marginalen Hochwinkelstrahlen (204B) auf eine hintere Fokalebene einer Objektivlinse (224) scannt, die eine strukturierte Beleuchtung erzeugt, die die Probe (225) abklingend anregt; und
eine Spiegelanordnung (230, 234) zum Umleiten der zusammengezogenen gemusterten Fluoreszenzemissionen (205B) auf einen Detektor zum Detektieren der gemusterten Fluoreszenzemissionen (204A), die von der Probe ausgestrahlt werden.

6. System nach Anspruch 5, wobei die Anzahl und die Lage der Mehrheit von Pixels in der reflektierenden Zone so variiert ist, dass die Dicke eines abklingendes Feldes an der Probe (225) ebenso variiert ist.

7. System (300) für strukturierte Beleuchtungsmikroskopie, umfassend:
eine Lichtquelle (302) zur Erzeugung eines Anregungslichtstrahls (303);
einen räumlichen Lichtmodulator (304) zur Steuerung der Phase des Anregungsstrahls (303) zur Erzeugung eines Arrays von Erzeugungsmittelpunkten (304A) mit minimaler Störung zwischen jedem Erzeugungsmittelpunkt (304A); eine erste Linse (306), die eine Brennweite vom Fokalpunkt des räumlichen Lichtmodulators (304) weg entfernt positioniert ist, wobei die erste Linse (306) das Array von Anregungsmittelpunkten (304A) fokussiert;
einen radialen Öffnungsblock (308), der entlang der ersten Achse ausgerichtet ist, die an einer vorderen Fokalebene der ersten Linse (306) positioniert ist, wobei der radiale Öffnungsblock (308) dafür ausgelegt ist, eine Mehrheit von zentralen Niedrigwinkelstrahlen (303C) des Arrays von Anregungsmittelpunkten (304A) zu blockieren, während es ermöglicht wird, dass eine Mehrheit von marginalen Hochwinkelstrahlen (303B) des Arrays von Anregungsmittelpunkten (304A) durch den radialen Öffnungsblock (308) passieren können, wobei die marginalen Hochwinkelstrahlen (303B) von der ersten Linse (306) entlang einem Hochwinkel fokussiert werden und zentrale Niedrigwinkelstrahlen (303C) von der ersten Linse (306) entlang einem Niedrigwinkel fokussiert werden;
einen galvanometrischen Spiegel (316), der dafür ausgerichtet und positioniert ist, die marginalen Hochwinkelstrahlen (303B) durch eine Objektivlinse (322) umzuleiten und zu scannen, um die marginalen umgeleiteten Hochwinkelstrahlen (303B) zu fokussieren entlang einer Probe (324), die eine Anregung (305) durch die Probe (324) erzeugt, und dann wird die Anregung (305) von der Probe (324) wieder gescannt, um gemusterte Fluoreszenzemissionen (305A) auf ein Mikrolinsenarray (328) zu erzeugen, um die gemusterten Fluoreszenzemissionen (305A) in zusammengezogene gemusterte Fluoreszenzemissionen (305B) lokal zusammenzuziehen, wobei marginale Hochwinkelstrahlen (303B) auf die Probe (324) auftrifft in einem Winkel, der den kritischen Winkel übersteigt, die marginalen Hochwinkelstrahlen (303B) breiten sich in die Probe (324) nicht ein, wodurch nur eine abklingende Welle erzeugt wird, die in der Probe (324) exponentiell vergeht; und
eine Spiegelanordnung (330, 332) zum Umleiten der zusammengezogenen gemusterten Fluoreszenzemissionen (305B) auf einen Detektor (340) zum Detektieren der gemusterten Fluoreszenzemissionen (305B), die von der Probe (324) ausgestrahlt werden.

8. System nach Anspruch 1 oder 7, wobei der radiale Öffnungsblock (308) in einer Ebene konjugiert zur hinteren Fokalebene der Objektivlinse (322) positioniert ist.

9. System (400) für strukturierte Beleuchtungsmikroskopie, umfassend:
eine Lichtquelle (402) zur Erzeugung eines Anregungslichtstrahls (403);
eine erste Spinnscheibe (404) mit einer Mehrheit von konvergierenden Mikrolinsen mit einer ersten Neigung und Abstand, wobei die erste Spinnscheibe (404) mit der Lichtquelle (402) kommuniziert zum Umwandeln des Anregungslichtstrahls (403) in eine Mehrheit von Anregungsmittelpunkten (403A), wo die Mehrheit von Anregungsmittelpunkten (403A) ein ganzes Abbildungsfeld einer Probe (420) abdecken;
eine erste Linse (406) in teleskopischer Anordnung mit einer zweiten Linse (412), die die Mehrheit von Anregungsmittelpunkten (403A) an eine zwischenliegende Bildebene weiterleitet;
einen radialen Öffnungsblock (408), der an einem Fokalpunkt zwischen der ersten Linse (406) und der zweiten Linse (412) positioniert ist, wobei der radiale Öffnungsblock (408) zum Blockieren von zentralen Niedrigwinkelstrahlen der Mehrheit von Anregungsmittelpunkten (403A) bedient werden kann, während es ermöglicht wird, dass marginale Hochwinkelstrahlen (403B) der Mehrheit von Anregungsmittelpunkten (403A) durch den radialen Öffnungsblock (408) passieren können, wobei die marginalen Hochwinkelstrahlen (403B) von der ersten Linse (406) entlang einem Hochwinkel fokussiert werden und zentrale Niedrigwinkelstrahlen von der ersten Linse (406) entlang einem Niedrigwinkel fokussiert werden;
einen dichroitischen Spiegel (410), der zwischen der ersten Linse (406) und der zweiten Linse (412) positioniert ist zum Umleiten der Mehrheit von marginalen Hochwinkelstrahlen (403B) durch eine Objektivlinse (416) zum Fokussieren der umgeleiteten marginalen Hochwinkelstrahlen (403B) entlang der Probe (418), erzeugend Fluoreszenzemissionen (405) durch die Probe (418), wobei die marginalen Hochwinkelstrahlen (403B) die Probe (418) abklingend anregt;
eine erste Spinnnadellochscheibe (424), die mit dem dichroitischen Spiegel (410) kommuniziert, wobei die erste Spinnnadellochscheibe (424) eine Mehrheit von Nadellöchern mit der Neigung und dem Abstand der ersten Spinnscheibe (424) umfasst, wobei die Spinnnadellochscheibe (424) bedient werden kann, um die Fluoreszenzemissionen (405), die von der Probe (418) ausgestrahlt werden, zu empfangen und Fokusemissionen oder Streulicht zu blockieren; und
eine zweite Spinnscheibe (426) mit einer Mehrheit von konvergierenden Mikrolinsen, die zwischen der Spinnnadellochscheibe (424) und der Probe (418) positioniert sind zum Empfangen der Fluoreszenzemissionen (405), die durch die Spinnnadellochscheibe (424) übertragen werden, wobei die zweite Spinnscheibe (426) bedient werden kann, um die Fluoreszenzemissionen (405) in zusammengezogene, nicht-invertierte Fluoreszenzemissionen (405A) lokal zusammenzuziehen, wobei die erste und zweite Spinnscheibe (424, 426) mit konvergierenden mikrolinsen und der Spinnnadellochscheibe gemeinsam hintereinander drehen.

10. System nach Anspruch 9, wobei das Hintereinanderdrehen der ersten und zweiten Spinnscheibe (424, 426) mit konvergierenden Mikrolinsen und der Spinnnadellochscheibe eine Super-Bildauflösung während einer einzelnen Kamerabelichtung des Detektors (434) erzeugt.

## Revendications

1. Système (100) de microscopie par illumination de structure, comprenant :
une source de lumière (102) destinée à générer un faisceau lumineux d'excitation (104) ;
un premier réseau de microlentilles (106) destiné à diviser le faisceau d'excitation (104) en un réseau de foyers d'excitation (104A) ;
une première lentille (108) alignée le long du premier axe et positionnée à une longueur focale à l'écart d'un point focal du premier réseau de microlentilles (106), la première lentille (108) focalisant le réseau de foyers d'excitation (104A) ;
un bloc d'ouverture radiale (110) aligné le long du premier axe positionné à un plan focal avant de la première lentille (108), le bloc d'ouverture radiale (110) étant configuré pour bloquer une pluralité de rayons centraux à angle faible (104C) du réseau de foyers d'excitation (104A), tout en permettant à une pluralité de rayons marginaux à angle élevé (104B) du réseau de foyers d'excitation (104) de passer à travers le bloc d'ouverture radiale (110), les rayons marginaux à angle élevé (104B) étant focalisés par la première lentille (108) le long d'un angle élevé, et les rayons centraux à angle faible (104C) sont focalisés par la première lentille (108) le long d'un angle faible ;
un miroir galvanométrique (118) aligné et positionné pour rediriger et balayer les rayons marginaux à angle élevé (104B) à travers une lentille d'objectif (124) pour focaliser les rayons marginaux à angle élevé (104B) redirigés le long d'un échantillon (125) qui génère une excitation (105) par l'échantillon (124) puis l'excitation (105) de l'échantillon (125) est rébalayée pour générer des émissions de fluorescence à motifs (105A) sur un deuxième réseau de microlentilles (128) pour contracter localement les émissions de fluorescence à motifs (105B) en un motif contracté d'émissions de fluorescence (105B), les rayons marginaux à angle élevé (104B) excitant de manière évanescente l'échantillon (125) ; et
un agencement de miroir (130, 154) pour rediriger les émissions de fluorescence à motifs contractés (105B) sur un détecteur (140) pour détecter les émissions de fluorescence à motifs (105B) émises par l'échantillon (125).

2. Système (100) selon la revendication 1, comprenant en outre :
une deuxième lentille (112) et une troisième lentille (114) positionnées entre le bloc d'ouverture radiale (110) et le miroir dichroïque (116), les deuxième et troisième lentilles (112, 114) imageant collectivement les rayons marginaux à angle élevé (104B) sur le miroir galvanométrique (118).

3. Système (100) selon la revendication 1, dans lequel la contraction locale des émissions de fluorescence à motifs (105B) est basée sur un facteur de contraction établi par les longueurs d'onde respectives du faisceau d'excitation (104) et les émissions de fluorescence à motifs (105B) et les caractéristiques physiques du bloc d'ouverture radiale (110).

4. Système (100) selon la revendication 3, dans lequel le facteur de contraction est fixé à une valeur d'environ 2.

5. Système (200) de microscopie par illumination de structure, comprenant :
une source de lumière (202) destinée à générer un faisceau lumineux d'excitation (204) ;
un premier réseau de microlentilles (206) destiné à diviser le faisceau d'excitation (204) en un réseau de foyers d'excitation (204A) ;
une première lentille (208) alignée le long du premier axe et positionnée à une longueur focale à l'écart d'un point focal du premier réseau de microlentilles (206), la première lentille (208) focalisant le réseau de foyers d'excitation (204A) ;
un dispositif de micro-miroir numérique (210) positionné au niveau d'un plan focal avant de la première lentille (208), le dispositif de micro-miroir numérique (210) pouvant fonctionner pour réfléchir une pluralité de rayons centraux à angle faible du réseau de foyers d'excitation (204A) hors axe par rapport à un axe défini par le dispositif à micro-miroir numérique si bien que seuls les rayons marginaux à angle élevé (204B) qui sont focalisés par la première lentille (208) le long d'un angle élevé ne sont pas réfléchis par le dispositif à micro-miroir numérique (210) ;
un miroir galvanométrique (218) positionné pour rediriger et balayer les rayons marginaux à angle élevé (204B) à travers une lentille d'objectif (224) pour focaliser les rayons marginaux à angle élevé (204B) redirigés le long d'un échantillon (225) qui génère une excitation (205) par l'échantillon (225), puis l'excitation (205) de l'échantillon (225) est rébalayée par le miroir galvanométrique (218) pour générer des émissions de fluorescence à motifs (205A) sur un deuxième réseau de microlentilles (228) pour contracter localement les émissions de fluorescence à motifs (205A) en des émissions de fluorescence à motif contracté (205B), le miroir galvanométrique (218) balayant les rayons marginaux à angle élevé (204B) sur un plan focal arrière d'une lentille d'objectif (224) qui produit une illumination de structure excitant de manière évanescente l'échantillon (225) ; et
un agencement de miroir (230, 234) pour rediriger les émissions de fluorescence à motifs contractés (205B) sur un détecteur pour détecter les émissions de fluorescence à motifs (204A) émises par l'échantillon.

6. Système selon la revendication 5, dans lequel le nombre et l'emplacement de la pluralité de pixels dans la zone réfléchissante sont varié si bien que l'épaisseur d'un champ évanescent au niveau de l'échantillon (225) est également variée.

7. Système (300) de microscopie par illumination de structure, comprenant :
une source de lumière (302) destinée à générer un faisceau lumineux d'excitation (303) ;
un modulateur spatial de lumière (304) pour commander la phase du faisceau d'excitation (303) pour générer un réseau de foyers d'excitation (304A) avec une interférence minimale entre chaque foyer d'excitation (304A) ;
une première lentille (306) positionnée à une longueur focale à l'écart d'un point focal du modulateur spatial de lumière (304), la première lentille (306) focalisant le réseau de foyers d'excitation (304A) ;
un bloc d'ouverture radiale (308) aligné le long du premier axe positionné à un plan focal avant de la première lentille (306), le bloc d'ouverture radiale (308) étant configuré pour bloquer une pluralité de rayons centraux à angle faible (303C) du réseau de foyers d'excitation (304A), tout en permettant à une pluralité de rayons marginaux à angle élevé (303B) du réseau de foyers d'excitation (304A) de passer à travers le bloc d'ouverture radiale (308), les rayons marginaux à angle élevé (303B) étant focalisés par la première lentille (306) le long d'un angle élevé, et les rayons centraux à angle faible (303C) sont focalisés par la première lentille (306) le long d'un angle faible ;
un miroir galvanométrique (316) aligné et positionné pour rediriger et balayer les rayons marginaux à angle élevé (303B) à travers une lentille d'objectif (322) pour focaliser les rayons marginaux à angle élevé (303B) redirigés le long d'un échantillon (324) qui génère une excitation (305) par l'échantillon (324) puis l'excitation (305) de l'échantillon (324) est rébalayée pour générer des émissions de fluorescence à motifs (305a) sur un réseau de microlentilles (328) pour contracter localement les émissions de fluorescence à motifs (305A) en des émissions de fluorescence à motif contracté (305B), les rayons marginaux à angle élevé (303B) se heurtant à l'échantillon (324) à un angle qui surpasse l'angle critique, les rayons marginaux à angle élevé (303B) ne se propagent pas dans l'échantillon (324), provoquant seulement la production d'une onde évanescente qui se désintègre de manière exponentielle dans l'échantillon (324) ; et
un agencement de miroir (330, 332) pour rediriger les émissions de fluorescence à motifs contractés (305B) sur un détecteur (340) pour détecter les émissions de fluorescence à motifs (305B) émises par l'échantillon (324).

8. Système selon la revendication 1 ou 7, dans lequel le bloc d'ouverture radiale (308) est positionné à un plan conjugué au plan focal arrière de la lentille d'objectif (322).

9. Système (400) de microscopie par illumination de structure, comprenant :
une source de lumière (402) destinée à générer un faisceau lumineux d'excitation (403) ;
un premier disque rotatif (404) avec une pluralité de microlentilles convergentes ayant un premier pas et un premier espacement, le premier disque rotatif (404) étant en communication avec la source de lumière (402) pour convertir le faisceau lumineux d'excitation (403) en une pluralité de foyers d'excitation (403A), la pluralité de foyers d'excitation (403A) couvrant un champ d'imagerie entière d'un échantillon (420) ;
une première lentille (406) en agencement télescopique avec une deuxième lentille (412) qui relaie la pluralité de foyers d'excitation (403A) vers un plan d'image intermédiaire ;
un bloc d'ouverture radiale (408) positionné à un point focal entre la première lentille (406) et la deuxième lentille (412), le bloc d'ouverture radiale (408) pouvant fonctionner pour bloquer les rayons centraux à angle faible de la pluralité de foyers d'excitation (403A), tout en permettant à des rayons marginaux à angle élevé (403B) de la pluralité de foyers d'excitation (403A) de passer à travers le bloc d'ouverture radiale (408), les rayons marginaux à angle élevé (403B) étant focalisés par la première lentille (406) le long d'un angle élevé, et les rayons centraux à angle faible sont focalisés par la première lentille (406) le long d'un angle faible ;
un miroir dichroïque (410) positionné entre la première lentille (406) et la deuxième lentille (412) pour rediriger la pluralité de rayons marginaux à angle élevé (403B) à travers une lentille d'objectif (416) pour focaliser les rayons marginaux à angle élevé (403B) redirigés le long de l'échantillon (418) qui génère des émissions fluorescentes (405) par l'échantillon (418), les rayons marginaux à angle élevé (403B) excitant de manière évanescente l'échantillon (418) ;
un premier disque rotatif de trou d'épingle (424) en communication avec le miroir dichroïque (410), le premier disque rotatif de trou d'épingle (424) comprenant une pluralité de trous d'épingle avec le pas et l'espacement du premier disque rotatif (424), le disque rotatif de trou d'épingle (424) pouvant fonctionner pour recevoir les émissions fluorescentes (405) émises par l'échantillon (418) et bloquer les émissions focalisées ou la lumière diffusée ; et
un deuxième disque rotatif (426) avec une pluralité de microlentilles convergentes, positionné entre le disque rotatif de trou d'épingle (424) et l'échantillon (418) pour recevoir les émissions fluorescentes (405) transmises à travers le disque rotatif de trou d'épingle (424), le deuxième disque rotatif (426) avec des microlentilles convergentes pouvant fonctionner pour contracter localement les émissions de fluorescence (405) en des émissions de fluorescence contractées et non inversées (405A), les premier et deuxième disques rotatifs (424, 426) avec les microlentilles convergentes et le disque rotatif de trou d'épingle tournant ensemble en tandem.

10. Système selon la revendication 9, dans lequel la rotation en tandem des premier et deuxième disques rotatifs (424, 426) avec des microlentilles convergentes et le disque rotatif de trou d'épingle produit une image de super-résolution pendant une seule exposition de caméra du détecteur (434).
